# EUROPEAN PATENT SPECIFICATION

(11) **EP 4 134 887 B1**
(45) Date of publication and mention of the grant of the patent: **08.10.2025**
(21) Application number: 21190711.8
(22) Date of filing: 11.08.2021
(51) Int. Cl.: G06Q 10/04, G06Q 50/40

(54) **CONTROL APPARATUS FOR A PUBLIC TRANSPORTATION SYSTEM, PUBLIC TRANSPORTATION SYSTEM, METHOD FOR DETERMINING DEPARTURE TIMES OF A PUBLIC TRANSPORTATION SYSTEM AND COMPUTER PROGRAM PRODUCT**
STEUERVORRICHTUNG FÜR EIN ÖFFENTLICHES TRANSPORTSYSTEM, ÖFFENTLICHES TRANSPORTSYSTEM, VERFAHREN ZUR BESTIMMUNG DER ABFAHRTSZEITEN EINES ÖFFENTLICHEN TRANSPORTSYSTEMS UND COMPUTERPROGRAMMPRODUKT
APPAREIL DE COMMANDE POUR SYSTÈME DE TRANSPORT PUBLIC, SYSTÈME DE TRANSPORT PUBLIC, PROCÉDÉ DE DÉTERMINATION DES HEURES DE DÉPART D'UN SYSTÈME DE TRANSPORT PUBLIC ET PRODUIT PROGRAMME INFORMATIQUE

(43) Date of publication of application: 15.02.2023
(73) Proprietor: Hitachi, Ltd., Tokyo 100-8280 (JP)
(72) Inventor: WISETJINDAWAT, Wisinee, London, EC2Y 5AJ (GB); SAKIKAWA, Shuichiro, London, EC2Y 5AJ (GB); HARADA, Satoru, London, EC2Y 5AJ (GB)
(74) Representative: MERH-IP Matias Erny Reichl Hoffmann Patentanwälte PartG mbB

(56) References cited:
- US-A1- 2018 082 586

## Description

The present subject matter especially relates to an apparatus providing improved control of a public transportation system. A corresponding system, a method and a computer program product are provided as well. The control of a transportation system is especially improved by automatically providing control information to a human operator of the public transportation system based on which the human operator can control the transportation system, or by enabling an automated control of the transportation system in which the operator is another computer-based entity/unit which controls the transportation system based on automatically generated control information. The automatically provided control information especially relates to a dwell time and/or a cruising speed of a vehicle of the transportation system which can be dynamically determined based on (real-time) travel data from passengers using the transportation services. The travel data can be processed by a transfer demand prediction unit and an arrival time prediction unit which may be enabled by a machine learning/artificial intelligence unit. Correspondingly, a further automated and more reliable system for public transportation can be provided. Moreover, a more efficient use of the technical transportation capacity of transportation vehicles comprised in said system can be enabled. Further aspects which serve to provide an improved control system synergistically will become apparent from the following.

### Background

US 2018/082586 A1 shows a method which includes receiving a current location of a vehicle, a real-time traffic information along a route of transit, and a current passenger demand at a first subsequent station and a second subsequent station. The method includes predicting a dwell time for the vehicle corresponding to the first subsequent station. The method includes predicting an arrival time instant of the vehicle at the second subsequent station based on a predicted first travel time of the vehicle, a predicted second travel time of the vehicle, and the predicted dwell time. The method includes predicting a passenger occupancy of the vehicle at the predicted arrival time instant at the second subsequent station based on at least a first passenger demand, a second passenger demand associated with the second subsequent station, and a passenger alighting pattern.

Prior art, such as US 2015/0360706 A1 describes an operation management device that manages the operation of a plurality of vehicles which is provided with: a vehicle position acquisition unit that acquires the positions of a plurality of vehicles; an interval adjustment unit that, on the basis of congestion information, identifies a station that is a reference for increasing the density of the plurality of vehicles that are present and sets a standby time at each station that is behind the station that is a reference, the standby time being for the plurality of vehicles that stop at the stations behind the station; and a departure determination unit that adjusts the departure times of the plurality of vehicles from each of the stations behind the station on the basis of the standby times. A system according to the above-cited prior art furthermore receives position information of train carriages and sends the information to the vehicle position acquisition unit. The system then adjusts the train spacing in order to eliminate congestion on the travel route of a transportation service.

However, the above described system does not consider the effects of a delay, a congestion or the like in a transportation system on passengers using said transportation system, the impacts on passengers and transportation vehicles of a second transportation service linked to a first transportation service via a transfer connection or the management of workload of the transportation vehicles of the second transportation system in case a transportation vehicle of a first transportation service arrives late at a transfer station between the first and the second transportation service. Further, the use of (real-time) passenger data for automatically determining a transfer demand at the stations of the transportation system and for automatically providing arrival times in real-time is not described.

### Problem and Solution

It is a technical object to provide an apparatus, a corresponding system, a method and a computer program product which are further improved in view of the control of a public transportation system. Especially, it is an object to improve the level of automation of the control of the public transportation system. More specifically and in particular, the decision as to dwell times and/or cruising speeds of a transportation vehicle of said transportation system shall be enabled to be further automated as well as the determination of a transfer demand at the stations of the transportation system and real-time arrival times shall be automated. Preferably, this shall be enabled by the use of historical and/or real-time travel data of passengers from which parameters and values are derivable. Further, a controller (human or computer-based) shall be enabled to take a better decision about the adaption of dwell times and/or travelling speed of a transportation service. This is solved by the subject matter of the appended claims.

According to a first aspect, there is proposed an apparatus for the control of a public transportation system. The apparatus is preferably located in a stationary back-end server system. The server is connected to a mobile device of a passenger via a wireless data connection. The mobile device may be a smartphone, a tablet, a laptop, a smartwatch or the like. The mobile device further has a graphic user interface for displaying relevant information to the user of the mobile device.

The apparatus includes a database which may be configured to store historical travel data of passengers using the transportation services. The data storage unit itself may be any kind of a hardware memory device. The number of databases may be one or more and the different kind of data may be stored and distributed over the one or more databases.

The term transportation service shall be understood, preferably, as a service for public transportation comprising a train, a bus, a railway station, a bus station, a train route, a bus route and/or the like. In other words, the term transportation service may be used to refer to the transportation infrastructure and transportation vehicles which are part of a system for public transportation which is used by persons hereinafter referred to as passengers. A public transportation system may comprise a plurality of transportation services.

Historical travel data of passengers using the transportation service may include the compiled history of events in which a passenger uses a transportation service for transportation. Correspondingly, the data may comprise records of passenger smart card usages identifying the respective passenger and the specifics of the used transportation service or records or a tracked travel path obtained from be-in-be-out smart ticketing. A smart card may be an electronic travel service ticket, for example, based on NFC technology. The historical travel data may, e.g., include an ID of a passenger, the start and stop stations, date and time stamps and/or geolocations during the use of a transportation service. The data may stem from mobile user devices of the passenger, smart tickets or the like.

The apparatus further comprises a transfer demand prediction unit configured to receive a travel plan form a plurality of mobile devices of passengers using a transportation service, determine, as a transfer demand value, a number of passengers which (plan to/will) transfer between a first and a second transportation service based on the received travel plan and the historical travel data stored in the database.

Here, a travel plan shall, preferably, be understood to correspond to information regarding the origin and the destination of a passenger's journey while using the transportation system. The travel plan may comprise information with respect to the start of a passenger's journey and the end of a passenger's journey. Preferably, the start and the end of the travel plan indicate a station of the transportation system, such as a bus station or a train station. Furthermore, the travel plan may comprise information regarding a transfer station lying in between a station of a first transportation service marking the beginning of a passenger's journey and a station of a second transportation service marking the end of a passenger's journey. The travel plan may be input by a user into a software application running on the user's mobile device when or before the user starts the journey.

The term transfer demand value is, preferably, to be understood as the number of passengers at every connectable station where a transfer between two different transportation services is possible. In other words, when a passenger journey necessitates the use of two or more different transportation services, a transfer demand between the different transportation is created. As a plurality of passengers may need to transfer from one transportation service to another, a transfer demand value corresponding to the number of those passengers can be determined.

Date/Time stamps and position/location information of a passenger may be determined by the mobile device. The mobile device comprises a position determination unit configured to receive position information data to determine the location information of a passenger based on the received information. The received information includes data on the latitude, the longitude and the elevation of the mobile device used by the passenger sent by one or more satellites which are part of a global satellite navigation system. This facilitates reliably attaining the position information data while reducing data traffic due to the unilateral signal transmission of satellite-based navigation systems. More preferably, the global satellite navigation system may be one of the major established global satellite navigation systems such as GPS, Galileo, GLONASS or the like that may unilaterally transmit data for position determination. Also, the location information is complemented with a time stamp at each sampling point of the position determination which is provided by the internal clock of the mobile device. The internal clock of the mobile device may be synchronized with an external time signal which is received by the mobile device via wireless communication such as a cellular phone network or a Wi-Fi connection. Further, location information and time stamps may also be provided from the be-in-be-out ticket which can be tracked during the passenger's journey or from a smart ticket use, e.g., when the ticket is swiped at the entry or exit of a station.

Further, an arrival time prediction unit of the apparatus is configured to predict an arrival time of a transportation vehicle of a first transportation service at a station for transferring between the first transportation service and a second transportation service.

Further, the apparatus comprises a dwell time analysis unit configured to receive the transfer demand value from the transfer demand prediction unit and the predicted arrival times of one or more first transportation vehicles from the arrival time prediction unit and determine one or more dwell times of the second transportation service in a station based on the predicted arrival times and/or a cruising speed of the transportation vehicle.

The number of predicted arrival times may be one or more depending on the number of first transportation vehicles which shall be considered for the analysis. Preferably, the number is one and it relates to one first transportation vehicle for which the analysis shall be performed in the specific moment.

The term dwell time is, preferably, to be understood as the scheduled period of time which a transportation vehicle stays/waits/stops at a station in order to allow passengers to enter or alight the transportation vehicle or for any other reason. This period of time may be extended in relation to the scheduled dwell time in order to wait for passengers that may otherwise not reach the transportation in time to enter it. More specifically, passengers of a first transportation service that are on board a delayed transportation vehicle intending to board a transportation vehicle of a second transportation service in order to continue their journey according to their travel plan, are able to board the transportation vehicle of the second transportation service due to an extended dwell time of said transportation vehicle in the station. The number of dwell time values being calculated may be one or more and if it is more than one, a set of dwell time (values) may be determined preferably from which an operator or an operation unit may select one dwell time value.

The dwell time value may be determined, in a preferred example, by adjusting the dwell time so that, in case of a delay of a transportation vehicle, at least a predefined percentage of passengers of the delayed transportation vehicle (including those who are waiting for the delayed transportation vehicle) will not miss their connection. Correspondingly, the cruising speed/travelling speed may be set, e.g. by increasing it for the second transportation service to reduce the impact on the further stops. Moreover, it is also very preferably possible that the adaption of the dwell time and/or the travelling speed is determined based on an impact parameter representing an impact on the transportation service and the passengers who use it or who want to use it. More specifically, the dwell time/cruising speed values may be determined based on a minimization of the impact parameter which is further described below and which has the technical advantage that a decision can be taken based on a very reliable and less computational complex calculation process.

Here, the term cruising speed is preferably to be understood as a velocity maintained by a transportation vehicle in between the stations of a transportation service. By implementing different cruising speeds between said stations, it is possible to adjust the time interval a transportation vehicle needs to reach a subsequent scheduled station of a transportation service. For example, as a first option, the cruising speed of the first and/or second transportation service may be increased if a dwell time is increased and if this shall be remedied by increasing the cruising speed, e.g., of the second transportation service. Further, the cruising speed may be reduced in another option in case that the dwell time cannot be extend for too long. For example, a cruising speed may be recommended for a transportation vehicle of a second transportation service if the arrival time determination for a transportation vehicle of a first transportation vehicle yields a delay of the transportation vehicle of the first transportation vehicle. Correspondingly, a reduced cruising speed may be implemented instead of or in addition to an extended dwell time in a station in order to give passengers intending to transfer from the first transportation service to the second transportation service the opportunity to board the transportation vehicle of the second transportation service. Even further, if a dwell time which exceeds the scheduled dwell for a preceding transportation vehicle at a certain station of a transportation service should be implemented, a reduced cruising speed may be recommended to a subsequent transportation vehicle in order to maintain a predetermined distance between transportation vehicles of the same transportation service. The cruising speed may be calculated based on the known distance between two stations and a desired arrival/travel time, as one example.

The control of a transportation system is improved by providing control information automated to a human operator of the public transportation system based on which the human operator can be guided to control the transportation system, or by enabling an automated control of the transportation system in which the operator is another computer-based entity/unit which controls the transportation system based on automatically generated control information. The automatically provided control information relates to a dwell time and/or a cruising speed of a vehicle of the transportation system. Correspondingly, a further automated and more reliable system for public transportation can be provided.

Accordingly, the level of automation of the control of a public transportation system can be further improved. More specifically and in particular, the decision as to dwell times and/or cruising speeds of a transportation vehicle of said transportation system can be further automated and the data of passengers using the transportation services are automatically used for enabling a (real-time) data-driven control decision about the adaption of the cruising speed and/or the dwell time. The dwell time with an updated schedule of the transportation vehicles may also be generated by an updated schedule generation unit, as, e.g., described in EP 3 539 844 A1.

Moreover, the claimed apparatus offers the technical effect of more efficient transportation of passengers using a plurality of transportation services in order to complete a journey from a station of a first transportation service to a station of a second transportation service which involves a transfer between said transportation services. This station will hereafter be referred to as a transfer station. This term also applies for a station where passengers can transfer between two or more transportation services.

Also, the claimed apparatus enables a more efficient use of the transportation capacity of the transportation vehicles by avoiding workload peaks when, for example, a plurality of passengers that would have missed a transportation vehicle of the second transportation service because of a delay in the operation of the first transportation service are able to reach the transportation vehicle of the second transportation service due to an extended dwell time of said transportation vehicle in a transfer station. Furthermore, as the workload of transportation vehicles of the second transportation service can hence be equalized by the claimed apparatus, the reduction of workload peaks caused by delays of the first transportation service results in reduced wear and tear of the of the transportation vehicles. Here, wear means the deterioration of the transportation vehicles due to increased strain on the technical components of the vehicles caused by transporting a large number of passengers at maximum occupancy of the people carrying capacity. Also, this term includes the wear of the interior of the vehicles such as upholstery and interior fittings. Technically beneficially, especially in view of providing an apparatus for controlling of a public transportation system, disruptions in the scheduled operation of the controlled system and hence possible negative impacts on the reliable transportation of passengers are mitigated by the automated determination of a dwell time and/or cruising speed by the claimed apparatus. The implementation thereof may then be performed by a human operator in a computer guided action or the operator can be another computer control which applies the determined dwell time and/or cruising speed adaption.

Further, the dwell time analysis unit is further configured to issue recommendation data to a transportation vehicle operator based on which a dwell time of the transportation vehicle of a second transportation service and/or a cruising speed of a transportation vehicle can be selected, wherein the transportation vehicle operator is a human operator and/or a computer based control entity.

Here, the recommendation data may be a set of data comprising one or more recommended dwell times and/or cruising speeds which may be implemented by the train operator. The generation of the recommendation data may be performed by the dwell time analysis unit based on the transfer demand between a first and a second transportation service determined by the transfer demand prediction unit and the arrival time of a vehicle of the first transportation service at the transfer station predicted by the arrival time prediction unit. If more than one dwell time is determined, the controller may have the choice to select the most suitable one. Further, a plurality of dwell times may also be issued in case that there is more than one second transportation service which departure time shall be changed.

Based on the recommendation data, the operator can decide to implement the dwell time adaption and/or cruising speed adaption. If a set of selectable dwell times and/or cruising speeds is presented with the recommendation data, the operator can select a value, as one example. If the operator is another control computer, the recommendation data can be considered as control input data based on which the control computer (operator) selects a value. If a set of alternative values/options is provided to the control computer (operator), the control computer may include internal control configurations based on which a selection can be performed, e.g. a control configuration may include that the control computer (operator) always selects the minimal dwell time, optimum cruising speed, the dwell time which causes the least subsequent congestion or the like.

It is noted that the cruising speed and the dwell time refer to an adaption thereof preferably. Further, the cruising speed may be adapted for the first and or the second transportation service, preferably for the second transportation service if a delay shall be reduced which was caused by an increased dwell time.

The control apparatus may be further configured to determine a delay (a value of a delay) which is related to/caused by a dwell time or a cruising speed determined by the dwell time analysis unit, wherein the delay may include the delay time of the transportation vehicle at the stations of the second transportation service and the delay time of other transportation vehicles of the second transportation service. In case the delay is below a predefined threshold, the dwell time analysis unit may generate recommendation data including a recommendation to select a dwell time and/or a cruising speed. As noted above, the recommendation data may be based on different preferred calculation options. It may be used a procedure according to which it is relatively simply calculated at which dwell time value and/or cruising speed adaption, the number of passengers who miss a connection is above a certain threshold. Further, it may be calculated an adaption so that the delay is reduced below the threshold. Further, a cost calculation can be performed and the adaption of the dwell time and/or the cruising speed can be performed by determining which adaption leads to a minimization of the costs.

In particular, the delay may be determined for the transfer station itself and/or for each subsequent station of the second transportation service in a usual manner. Further, the delay may not only affect the very next second transportation service but future services, such as subsequent trains, buses or the like on the same line or on other lines. These "other transportation vehicles" may also be affected by the delay and this may be calculated in a known manner as well.

The term delay or delay time may be understood as a deviation from the scheduled arrival time of a transportation vehicle in a station of a transportation service. Correspondingly the scheduled departure of said transportation vehicle may be affected if a delayed arrival at the station cannot be compensated by the scheduled dwell time of the transportation vehicle in said station. In view of the above-described configuration of the apparatus, the term delay shall especially refer to a delay that is caused by the implementation/adaption of a dwell time and/or cruising speed that has been determined by the dwell time analysis unit.

The delay may be compared to a predefined threshold. More specifically, the threshold may be set to depend on said impact on the passengers and may be set in order to prevent the delay from reaching a magnitude in which profound effects on the general operation of the public transportation and the passengers using the system are to be expected. Correspondingly, if a delay is higher than the threshold, the generation of recommendation data may not be performed since an implementation of a dwell time and/or cruising speed would disrupt the operation of the public transportation system and the transportation of passengers in an unacceptable manner. Further, alternatively, the recommendation data may include the indication that the dwell time and/or the cruising speed shall not be adapted.

The consideration of a delay of other vehicles of the transportation service provides the advantage of ensuring the avoidance of workload peaks of transportation vehicles that operate on the transportation service as follow-up. In other words, if an excessive dwell time of a transportation vehicle is implemented in a station it may cause congestion on a transportation service and passengers initially planning on boarding a transportation vehicle subsequent to the transportation vehicle implementing the extended dwell time may now board said transportation vehicle due to its delayed arrival. Correspondingly, considering the effect of a dwell time and/or cruising speed on other transportation vehicles of a transportation service is especially beneficial for enabling an efficient use of the transportation capacities of the transportation vehicles. Based on said impact, a stand-still of the transportation vehicles due to congestion on a transportation service caused by implementing an excessive dwell time and therefore inefficient use of said vehicles can be avoided.

The control apparatus may be further configured to determine an impact parameter which is related a total cost parameter, wherein the impact parameter may be determined based on (an increase of) total costs of passengers and/or the transportation service provider which result from an adaption of the dwell time and/or the cruising speed. The total cost parameter thus is a simply calculable measure for determining the impact of an adaption of the scheduled travel plan and a minimization of said total cost parameter value enables to select the best possible dwell time adaption value and/or cruising speed adaption value to keep the impact on passengers and the provider as low as possible. In case the impact parameter is below a predefined threshold, the dwell time analysis unit may generate the recommendation data preferably also including a recommendation to select a (specific) dwell time and/or cruising speed.

As described above, the delay is a possible means for deciding about the adaption of the dwell time/cruising speed and the impact parameter is another preferred option. The larger the number of passengers waiting for a delayed transportation vehicle to arrive at a station, the larger is the impact of the delay since more passengers will be affected by the delay. Also, the larger the number of passengers intending to transfer from one transportation service to another or in other words, the larger the transfer demand, the larger is the impact of the delay since more passengers will be affected by the delay. Accordingly, the magnitude of the impact depends on the number of passengers which are waiting to board or intending to transfer to a transportation vehicle for which a dwell time and/or a cruising speed may be implemented. The impact parameter which is preferably a total cost parameter visualizes the impact and allows optimization thereof.

The impact parameter is compared to a predefined threshold and if the impact parameter is below the threshold, the dwell time analysis unit may generate recommendation data including a recommendation to select a dwell time and/or a cruising speed by the operator of the transportation vehicle. The threshold may be set in order to prevent the impact from reaching a magnitude in which profound effects on the passengers using the system are to be expected.

Further, preferably, the apparatus further comprises a feedback train departure time update unit configured to receive an updated departure time of the vehicle of the second transportation service from the operator of said transportation vehicle and send the updated departure time to the plurality of passenger devices.

Here, updated departure time may indicate the actual departure time of the transportation vehicle which a passenger is intending to board according to the travel plan. Correspondingly, the updated departure time may deviate from the scheduled departure time of a transportation vehicle due to the implementation of an extended/adapted dwell time in a station and/or a cruising speed.

When the operator of a transportation vehicle makes the decision to implement a dwell time and/or cruising speed according to the recommendation data displayed on the transportation vehicle operator interface, the operator confirms said decision and as a result the implications of the decision are sent to the passenger devices in the form of an updated departure time by the feedback train departure time update unit. Likewise, when the operator confirms a dwell time and/or cruising speed implemented by the apparatus performing fully automated control of the public transportation system, the implications of said dwell time and/or cruising speed are sent to the passenger devices in the form of an updated departure time by the feedback train departure time update unit.

The feedback train departure time update unit may be part of the back-end server and configured to communicate with the transportation vehicle operator interface on one side and the passenger devices on the other side.

The above synergistically adds to the guided human-machine interaction facilitated by the claimed apparatus because the passengers are provided with information based on which they can decided whether to further pursue their travel plan or to make changes to their journey. Those changes may include choosing another transportation vehicle or transportation service and thereby following a modified travel plan or choosing a transportation mode outside of the public transportation system.

Furthermore, in case the transportation vehicle operator is a human operator, the control apparatus further includes a graphic user interface which may be configured to display the recommendation data and prompt the human operator to select and implement an adapted dwell time and/or a cruising speed. In case the transportation vehicle operator is a computer-based control entity, the transportation vehicle operator receives the recommendation data and issues a control signal to a transportation vehicle including to apply the dwell time and/or the cruising speed.

The graphic user interface may be a graphic user interface comprising a liquid crystal display or a thin film transistor display as an output and an input device such as a touch sensitive display surface, a mouse and/or a keyboard.

Displaying the recommendation data on the graphic user interface gives the train operator the opportunity to make a decision on whether to implement an adapted dwell time and/or cruising speed. This offers the possibility to provide an improved computer guided control of the public transportation system. This is especially beneficial in view of assisting the operator in performing a technical task such as controlling said transportation vehicle and the public transportation system. In the case in which the operator is a computer-based control entity, the fully automated control of the public transportation system can be further improved by directly and automatically issuing a control signal to operate the transportation vehicle in a way that results in the implementation of the dwell time and/or cruising speed.

Further, preferably, the database may further include coordinates of routes and stations and schedule data of available transportation services, and historical arrival and departure times of the transportation services. Also, the control apparatus may include a travel demand prediction unit which is configured to receive the historical travel data and departure times of the transportation services from the database. The travel demand prediction unit may be further configured to generate a travel origin destination matrix including the historical passenger journey by matching the historical travel data with the coordinates of routes and stations, and /or the historical arrival and departure times of the transportation services.

Coordinates of routes and stations and of available transportation services shall be understood as data representing the longitude and latitude of the infrastructural components of a transportation service such as travelling routes of the transportation vehicles and stations lying on those routes The term schedule data is, preferably, to be understood as data which comprises arrival and departure times of every transportation service which is part of the system for public transportation described above. In other words, the schedule data comprises the official/planned arrival and departure times at the different stations of the public transportation system based on which the system for public transportation is operated.

Historical arrival and departure times of a transportation service may include recorded points in time of arrival and departure of a transportation vehicle in or from a station of a transportation service. Those points in time may differ from the scheduled arrival and departure data of a transportation vehicle in or from a station due to external factors such as traffic congestion, unforeseen events during the operation of the transportation service, weather conditions and the like.

Here, the determination of a travel demand value may be based on a travel origin destination OD matrix or trip chain data of one or more passengers constructed using historical usage of a passenger's smart card, be-in-be-out cards and/or mobile devices and a real time travel itinerary from smart ticketing wherein the records of smart card usages, the coordinates of transportation routes and schedule data of transportation services are used to conduct spatial and temporal matching of smart card swiping data and said trip chain data.

Here smart ticketing may be a system that electronically stores a travel ticket on a microchip, which is then usually embedded on a smartcard. A smartcard could allow passengers of public transport to seamlessly hop on and off buses, trams or trains without having to use traditional payment systems like cash or a purchasing a paper ticket. The contactless smartcard is scanned either at a static or handheld ticket machine, or barrier, to authorize the usage of a transportation service.

The term trip chain may be understood as a sequence of scheduled events according to a travel plan of a passenger which a passenger may routinely perform on a day-to-day basis. Those events may include boarding a transportation vehicle of a first transportation service, travelling one or more transportation service sections by said transportation vehicle, alighting from a transportation vehicle of a first transportation service at a transfer station linking the first transportation service and a second transportation service, boarding a transportation vehicle of a second transportation vehicle, travelling one or more transportation service sections on said transportation vehicle and alighting from the transportation service vehicle of the second transportation service. This passenger journey may also include transferring between more than two different transportation services between the starting point and the end point of the passenger journey. The trip chain may also include the described passenger journey in the opposite direction as for instance as a part of a daily commute a passenger conducts.

The term real time travel itinerary may be understood as the current chain of events in a travel plan of a passenger. In other words, the real time travel itinerary provides information on the current state and position a passenger is in. This information can be used in conjunction with the historical usage data of a passenger's smart card to construct a trip chain for each passenger using the public transportation system.

Spatial and temporal matching of smart card swiping data preferably means that the transfer demand prediction unit performs a matching operation of the coordinates of the routes and stations of all available transportation services with the passenger position determined by the mobile device or be-in-be-out ticket as a spatial component and the scheduled arrival and departure times of all available transportation with the current time of day as a temporal component respectively.

By performing the spatial and temporal matching of a passenger journey with the trip chain a synergistically beneficial effect regarding the determination of the transfer demand value can be achieved. In particular, the transfer demand value can be determined more accurately due to the combination of real-time data of a passenger journey with historical data reproducing the daily routines and travelling habits of the passenger making the passenger journey.

Also, the determination of the travel demand value may be based on historical data from Be-In/Be-Out smart ticketing wherein the Be-In/Be-Out smart ticketing system is configured to directly track a passenger's location along a route of a transportation service by matching coordinates of a passenger's travel path with the coordinates of the transportation service routes.

Be-In/Be-Out (BIBO) ticketing services in public transportation systems may utilize implicit interaction and enable passengers to obtain their virtual tickets by being inside a transportation vehicle. Infrastructural appliances detect the presence of the passengers and initiate unnoticed ticketing services in the background. Bluetooth Low Energy (BLE) may be used as enabling technology for the implementation of BIBO systems.

Before, it was described how a spatial and temporal matching of a passenger journey is performed for smart card swiping data. In this instance however, a map matching may be performed instead of the spatial and temporal matching. Here, the travel demand value can be obtained from map matching that matches the coordinates of a passenger's travel path with the coordinates of the available routes and stations of the public transportation system.

Correspondingly, a more accurate determination of the transfer demand value offers the advantage of a more reliable control of a public transportation system. Also, in view of making efficient use of the transportation capacities of the transportation vehicles comprised in the public transportation system a more accurate determination of the transfer demand value is desirable for the above-described reasons.

Further, in view of the above, the historical travel data may include data form smart cards or mobile devices of a passenger which include location information and time stamps for each location of the passenger along an entire journey and/or the historical data may include data from a Be-In/Be-Out smart ticket and/or mobile devices which include the passenger's locations and time stamps at the time of entering and exiting a transportation system.

Moreover, the transfer demand prediction unit may include a trained machine learning unit which may receive, as an input, the travel OD matrix data or trip chain data, respectively, and/or actual transfer demands from passengers to generate the predicted transfer demand value.

In this case, the machine learning unit may use a matching learning technique. The machine learning unit is trained using historical travel demand values between transportation stations of the public transportation system and the geographical distances.

Actual transfer demands may be inferred from the travel plan provided by the passengers via the mobile devices or may be directly entered by a passenger into the software application (smart ticketing software) running on the mobile device.

Historical travel demand values may include historical numbers of passengers that have used the available transportation services of a public transportation system. The historical travel demand values are stored for every station of a public transportation system which is a transfer station between different transportation services to create a data foundation for the determination of the number of passengers transferring from one transportation service to another. Using historical transfer demand values offers the benefit of increased accuracy because referring to historical transfer demand values enables the inclusion of statistical inference in the determination of the current transfer demand value.

As the determination of the travel demand value may be based on historical travel demand values and the geographical distances between the first and the last station of a passenger journey, the transfer demand value can be determined more accurately. A large geographical distance makes it more probable that a passenger will need to transfer between transportation services what enables a more accurate determination of the transfer demand value in combination with the travel plan of the passenger.

According to the above, the reliability of the apparatus in making more efficient use of the transportation capacity of the transportation vehicles can be increased by determining a more accurate travel demand value as the basis for the determination of the transfer demand value. In other words, an improved basis for making a decision whether to implement a dwell time at a station and/or an unscheduled cruising speed is provided due to an increased accuracy in the determination of the transfer demand value.

Correspondingly, the use of a machine learning process synergistically adds to the advantages of the apparatus by facilitating a more accurate estimation of the transfer demand value due to the incorporation of statistical inference into the estimation process of the travel demand.

Further, the transfer demand prediction unit may receive data about geographical distances between stations of different transportation services which are stored in the database. Moreover, the trained machine learning unit may use the geographical distances as a further input to determine the transfer demand value.

The stored geographical distances (geographical relations) may correspond to transportation service sections linking stations of the public transportation system. The term transportation service section shall preferably be understood as the distance a passenger has to travel in order to cover the distance between two stations of the public transportation system.

The term geographical distance may indicate the stretches of way that lie between two stations with respect to the whole public transportation system. This also may include the stretches of way between the stations of two different transportation services. Moreover, the term geographical distance also applies to the distance between two stations of a public transportation system based on the available transportation routes linking them. Said distance may also extend over the routes of two or more different transportation services.

Hence, the geographical distances and the transportation service section may be stretches of a passenger journey that can be measured in any suitable quantity. In this application the distance unit kilometre is used.

Using geographical distances as further input for the determination of the transfer demand value helps in making the data foundation on which the transfer demand is determined to be more extensive.

Correspondingly, a more accurate determination of the transfer demand value offers the advantage of a more reliable control of a public transportation system. Also, in view of making efficient use of the transportation capacities of the transportation vehicles comprised in the public transportation system a more accurate determination of the transfer demand value is desirable for the above-described reasons.

Further, the database may be configured to store weather information and the trained machine learning unit of the transfer demand prediction unit may be further configured to estimate the transfer demand value between each station of the first transportation service and each station of the second transportation service based on the additional information relating to the weather information.

The term weather information is to be understood as information relating to the weather conditions prevalent in the respective areas of the public transportation system which may have an influence on the transfer demand between transportation services. This means that weather conditions such as precipitation or cold temperatures may lead to an increased number of passengers using the public transportation service whereas sunny and dry conditions may lead to a decreased number of passengers. As the travel demand is directly linked to the number of passengers using the public transportation system, including weather information into the estimation of the transfer demand value offers the advantage of in increased accuracy of the transfer demand value.

Using weather information as further input for the determination of the transfer demand value helps in making the data foundation on which the transfer demand is determined to be more extensive.

Correspondingly, a more accurate determination of the transfer demand value offers the advantage of a more reliable control of a public transportation system. Also, in view of making efficient use of the transportation capacities of the transportation vehicles comprised in the public transportation system a more accurate determination of the transfer demand value is desirable for the above-described reasons.

Further, the arrival time prediction unit may be configured to receive location information and time stamps from a plurality of mobile devices of passengers using a transportation service and to match them to coordinates of routes and stations and schedule data of available transportation services stored in the database. Moreover, the arrival time prediction unit may include a trained machine learning unit which may be configured to evaluate actual travel times of the transportation service based on the location information from the plurality of mobile devices and to evaluate the travel times of the transportation service based on historical travel data and to estimate a predicted arrival time at the next stations of the transportation service.

In other words, said machine learning unit may be additionally configured to determine a travel time of a transportation vehicle on a transportation service section based on a machine learning algorithm using the travel time of the transportation vehicle on a previous transportation service section, historical data of the travel time of the vehicle on transportation service sections and the geographical distances.

Here, the travel time may be a time span that a transportation service vehicle needs to complete a transportation service section. Correspondingly, historical data of the travel time may be data comprising time spans the transportation vehicles of the public transportation service needed to cover a certain transportation service section during a previous course of operation.

This offers the advantage of the enabling the claimed apparatus to determine an actual arrival time of a transportation vehicle of a first transportation service at a station where passengers intend to transfer from the first transportation service to the second transportation service. If the determined arrival time deviates from the scheduled arrival time, therefore a delay of the transportation vehicle of the first transportation service can be derived and a predicted arrival time can be output by the machine learning unit.

This synergistically adds to a more accurate and reliable determination of the dwell time and/or cruising speed which may be implemented by the transportation vehicle of the second transportation service in order to allow the passengers of the first transportation service intending to transfer to the second transportation service to reach their scheduled connection. Therefore, also a more reliable operation of a public transportation system can be provided.

Further, it is claimed a transportation system comprising a plurality of passenger mobile devices configured to send a travel plan and location information including time stamps of a passenger using a transportation service, and a back-end server system configured to communicate with the plurality of passenger mobile devices and the operator or a computer-based control unit. The back-end server system further comprises the control apparatus described above.

Further, it is claimed a method for determining an adapted departure time, including the steps defined in independent claim 12.

Also, there is claimed a computer program product storable in a memory which, when carried out by a computer, causes the computer to perform the above-described method.

In other words, each configuration of the claimed apparatus shall also be encompassed by way of a method, which may be claimed by itself and/or by way of a computer program product claim.

Summarizing, a solution is provided which offers technical benefits especially with regard to the automation and reliability of a public transportation system and it also enables a guided interaction of passengers with the public transportation system. In addition to that the provided solution also enables the more efficient use of the transportation capacity of the transportation vehicles by equalizing their workload while also facilitating a reduction in wear and tear of the transportation vehicles.

In the following the claimed subject matter will be further explained based on at least one preferential example with reference to the attached drawings, wherein:
- Figure 1: shows a schematic overview of a system which uses an apparatus for determining a departure time
- Figure 2: shows the apparatus shown in Figure 1 in a more detailed manner
- Figure 3: shows a screen image of a passenger's mobile device
- Figure 4: shows a flowchart describing the trip chain construction for travel demand prediction from smart card data
- Figure 5: shows the algorithm for travel demand prediction from Smart Card data
- Figure 6: shows an exemplary table of records of smart card usages
- Figure 7: shows an exemplary table of coordinates of public transport routes
- Figure 8: shows an exemplary table of bus and train arrival time records
- Figure 9: shows an exemplary table of the results of the trip chain construction
- Figure 10: shows an exemplary table of the results of the construction of a travel matrix
- Figure 11: shows the algorithm for travel demand prediction from be-in-be-out smart ticketing data
- Figure 12: shows an exemplary table of the tracked travel path from be-in-be-out smart ticketing
- Figure 13: shows an exemplary table of the results of the matching of passenger coordinates with the coordinates of a transportation service route
- Figure 14: shows a flowchart describing the process of travel demand prediction
- Figure 15: shows an exemplary table of historical weather data
- Figure 16: shows an exemplary table of the geographical distances between stations
- Figure 17: shows an exemplary table of the results of the transfer demand prediction
- Figure 18: shows a flowchart describing the process of arrival time prediction
- Figure 19: shows an exemplary table of the geographical distances corresponding to transportation service sections
- Figure 20: shows an exemplary table of extracted travel times of a plurality of transportation service sections
- Figure 21: shows an exemplary table of travel times on a given transportation service section
- Figure 22: shows an exemplary table of predicted arrival times of a transportation vehicle at subsequent stops of a transportation service route
- Figure 23: shows a flowchart describing the process of recommended dwell time and/or cruising speed implementation

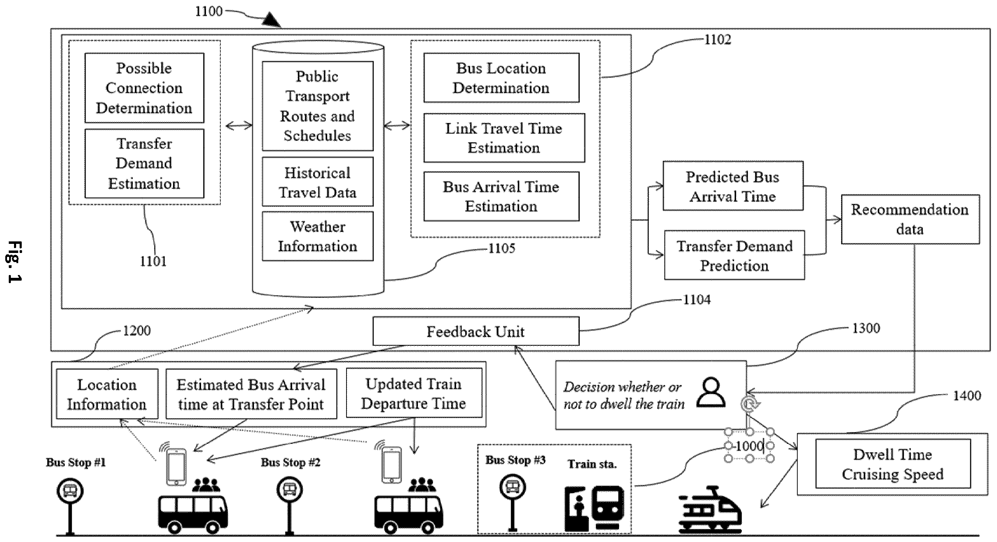

Figure 1 shows a schematic overview of the claimed system which comprises a back-end server system or back-end office 1100, a passenger's mobile device 1200, a train operation management system (TMS) 1400 and a transport vehicle operator 1300. The back-end server system further comprises a transfer demand prediction unit 1101, a database 1105, an arrival time prediction unit 1102, a dwell time analysis unit 1103 and a feedback unit 1104.

The mobile device 1200 is a smartphone, a tablet, a smart watch, a laptop or any other computing device. The mobile device further has a position determination unit which is configured to acquire position information from a global navigation satellite system (GPS) and a graphic user interface configured to display an estimated arrival time of transport vehicle, in this Figure exemplarily represented by a bus, of a first transportation system at a station where the passenger intends to transfer from the first transportation service to a vehicle of the second transportation vehicle, which in this Figure is exemplarily represented by a train, at a transfer station 1000.

The position information of a plurality of passengers with mobile devices 1200 using the bus belonging to a first transportation service intending to transfer from a first transportation service to the second transportation service is send to the back-end server system 1100 by their mobile devices 1200. The back-end server system 1100 uses the position information of the passengers to determine an arrival time of the bus at the transfer station 1000 and also performs a determination of a transfer demand value which are then both transferred to the dwell time analysis unit 1103. Specifically, the dwell time analysis unit 1103 (see Fig, 2) determines an impact parameter corresponding to the associated risks of implementing a dwell time and/or a cruising speed. The recommendation data comprising a recommended cruising speed and/or dwell time based on the impact parameter is sent to the to the transportation vehicle operator. The train operator 1300 then decides whether or not to implement the dwell time and/or cruising speed or in the case of the operator being a computer-based control entity, the operator automatically and directly issues a control command to implement the dwell time and/or cruising speed.

The control command of the train operator 1300 is then sent to the feedback departure time update unit 1104 and the train management system 1400. The feedback departure time update unit 1104 then sends an updated train departure time corresponding to the dwell time of the train in the transfer station 1000 and the determined arrival time of the bus at the transfer station 1000 to the mobile devices of the bus passengers in order to inform them about the details of their journey.

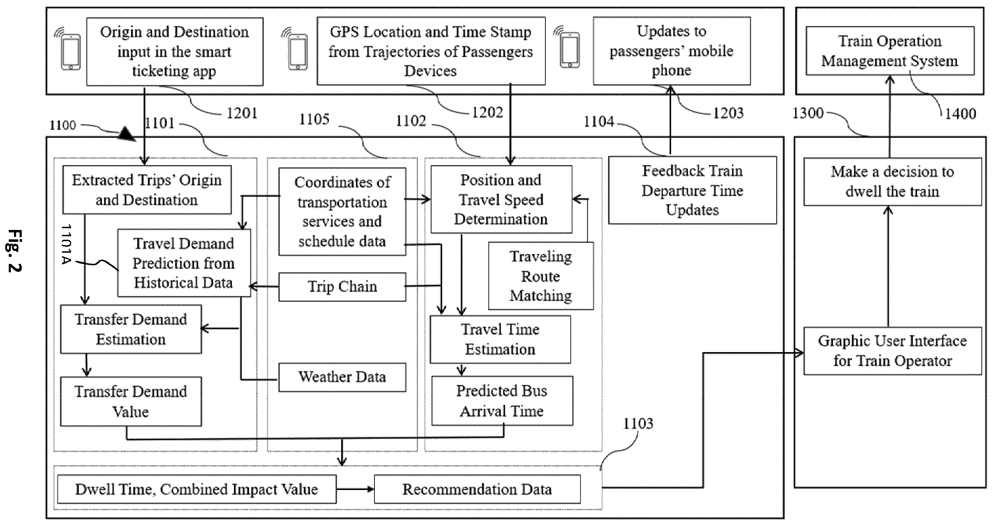

Further details on the processes involved in the determination of a departure time of the transportation vehicle of the second transportation service will become apparent from the description of the apparatus depicted in Figure 2.

Figure 2 shows a schematic overview of the structure of the claimed apparatus which includes a back-end server system. The back-end server system further comprises a transfer demand prediction unit 1101, a database 1105, an arrival time prediction unit 1102 and a dwell time analysis unit 1103. Furthermore, the back-end server system also comprises a feedback departure time update unit 1104.

The database 1105 is configured to store coordinates of routes and stations and schedule data of available transportation services of a public transportation system. Moreover, the database is configured to store weather information and historical travel data.

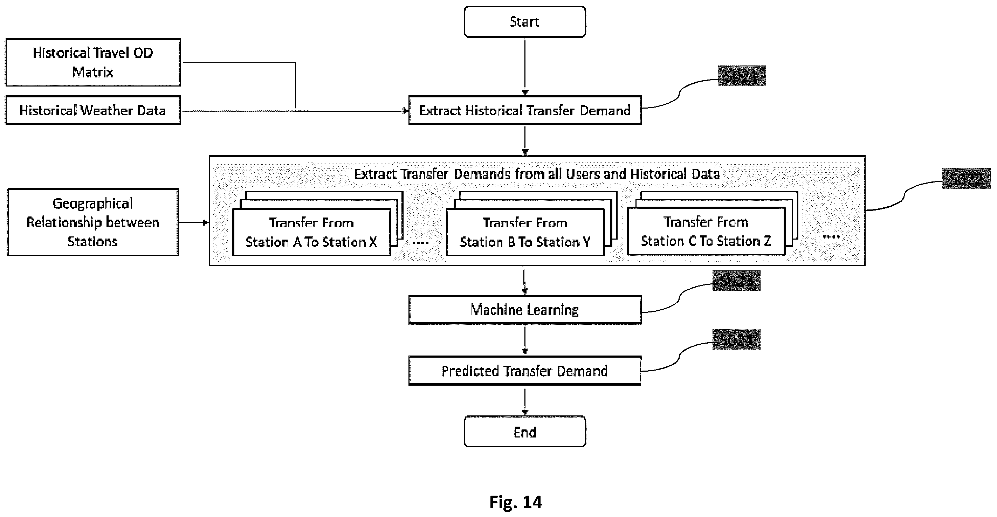

The transfer demand prediction unit 1101 is configured to receive a travel plan 1201, location information 1202 and time stamps from a plurality of mobile devices 1200 of passengers using a transportation service, determine, as a transfer demand value, a number of passengers which are about to transfer between a first and a second transportation service based on the received travel plan 1201 and the historical travel data. This is shown in Figure 2 in the box marked with the reference sign 1101 which represents schematically the transfer demand prediction unit 1101. Said transfer demand prediction unit 1101 is shown to receive the travel plan(s) 1201 of the passengers, e.g. when they enter a start/origin and a destination of their journey into a mobile application program. Based on said information and in combination from an input from the database including the historical travel data (see unit 1101A which predicts the travel demand from historical data) the transfer demand is estimated to determine the transfer demand value. The preferred specific process to determine the transfer demand is further described in connection with the Figure 14.

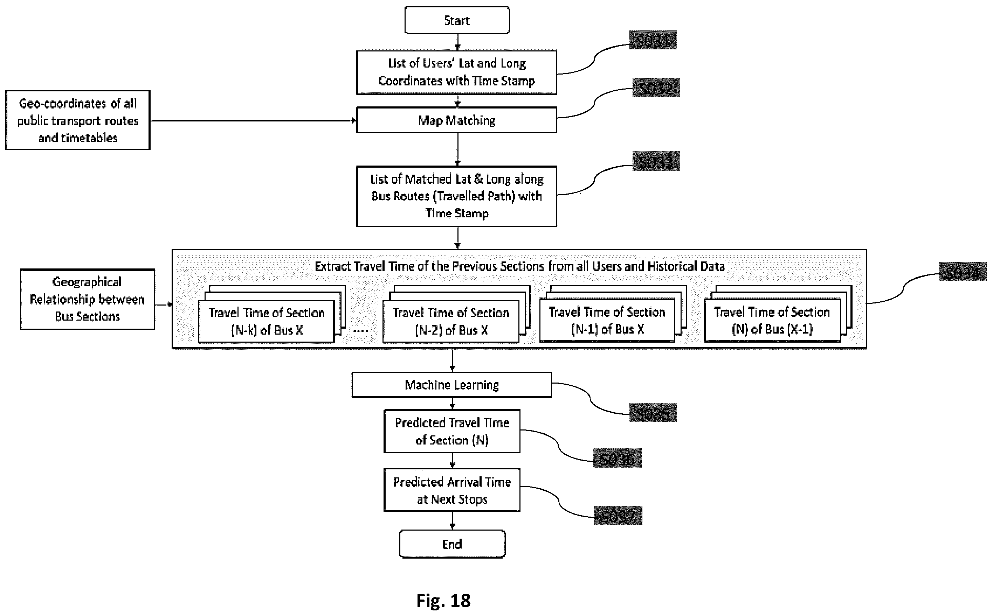

The arrival time prediction unit 1102 is configured to predict an arrival time of a transportation vehicle of a first transportation service at a station for transferring between the first transportation service and the second transportation service by receiving passenger locations and time stamps from the plurality of mobile devices 1200 preferably in real-time, identifying a transportation vehicle of a first transportation service used by a passenger by comparing the location information and time stamps to routes and schedule data of the first transportation service, predict the arrival time at a transfer station 1000 for transferring between the first transportation service and the second transportation service based on the historical travel data. As noted, preferably, the data about the location including a time stamp from a plurality of passengers and their mobile devices, respectively, is real-time data so that the arrival time can be determined based on the known remaining travelling distance and the position of the passengers. Figure 2 shows this determination by the sub-blocks of unit 1102 in which the position and the travel speed is determined based on the above explained real-time data. The data can then be used for the travel time estimation when it is matched with travelling routes of transportation devices based on which distances can be determined. Furthermore, it is also shown in Figure 2 that the database 1105 provides historical data of passenger journeys ("trip chain") to the travel time estimation, too. Figure 2 shows, as an example, that the arrival time of a bus is determined. This example assumes that a bus is a first transportation service which is connected with a subway as a second transportation service or the like. However, any other public transportation vehicle may be assumed for other examples correspondingly. A further detailed explanation about a preferred process of determining the arrival time(s) will be explained in connection with Figure 18.

The dwell time analysis unit 1103 is configured to receive the transfer demand value from the transfer demand prediction unit 1102 and the predicted arrival times of one or more first transportation vehicles from the arrival time prediction unit 1102 which is shown by the arrows at the bottom of Figure 2 as well as on the right side of Figure 1. The dwell time analysis unit 1103 may then determine one or more dwell times of the second transportation service in a station based on the predicted arrival times and/or a cruising speed of the transportation vehicle.

Among the data transmitted to the back-end server system 1100 are the position of a passenger mobile device 1200 and timestamps from events of a passenger journey. Also, the passenger mobile device 1200 transmits information to the back-end server system 1100 comprising the travel plan of a passenger comprising information on the origin and destination of said travel plan and real-time travel events acquired by smart ticketing.

Among the data received from the back-end server system 1100 by the passenger mobile device are updates send by the feedback departure time update unit 1104 comprising an updated departure time of a transportation vehicle corresponding to its dwell time at a transfer station 1000 where a passenger travelling by a first transportation service intends to transfer to a second transportation service. Also, the feedback time update unit 1104 sends information regarding a determined arrival time of the transportation vehicle of the first transportation service at the station at which a passenger intends to transfer to a transportation vehicle of a second transportation service.

After the dwell time analysis unit 1103 receives a transfer demand value from the transfer demand prediction unit 1101 and a determined arrival time from the arrival time prediction unit 1102 and then determines a dwell time, an impact parameter based on which a dwell time and/or a cruising speed are to be implemented are output to the train operator 1300 as recommendation data.

The recommendation data is then, in this instance, displayed on the transportation vehicle operator interface to the train operator 1300 who may take a decision whether or not to implement the recommended dwell time and/or cruising speed. This decision is also sent to the train operation management system 1400, as shown by Figure 2. Furthermore, the decision is also sent to the feedback departure time update unit 1104 which then, as described above, sends updated information regarding the arrival time of the transportation vehicle of the first transportation service at the transfer station 1000 and the departure time of the transportation vehicle of the second transportation vehicle at the transfer station 1000.

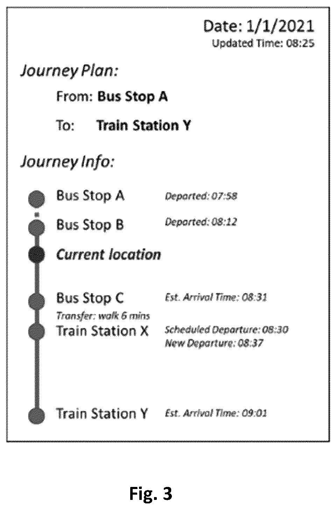

The herein proposed preferred processes of travel demand prediction and arrival time prediction on which the determination of the transfer demand value is based as well as the determination of the dwell time will be described in the following by referring to the Figures 3 to 23.

Figure 3 shows an exemplary image of a screen image of a passenger's mobile device 1200. In this example, the departure time of a train, which is a transportation vehicle of a second transportation service has been updated and is displayed as the new departure time. Moreover, the arrival time which has been determined by the arrival time prediction unit 1102 at bus stop C, which belongs to a first transportation service, is also displayed. In other words, the updated train departure time which has been changed from the scheduled departure time due to the implementation of an extended dwell time is displayed to the passenger.

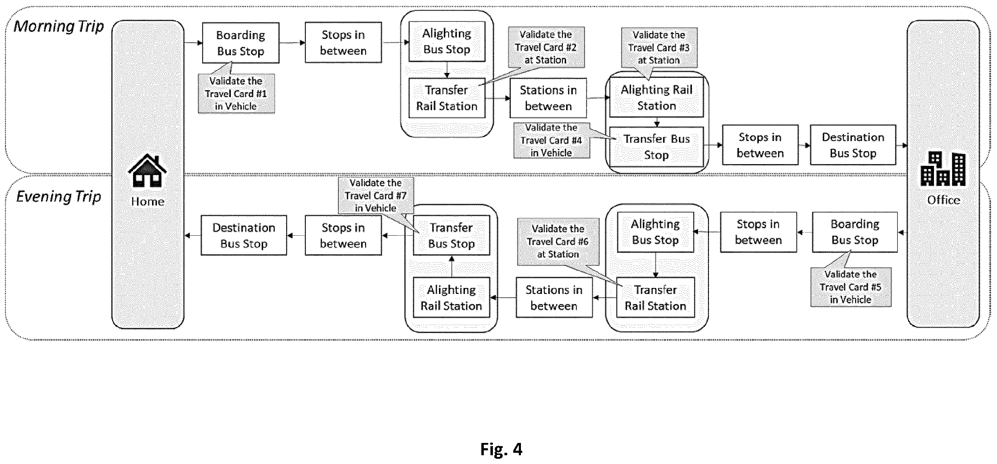

Figure 4 shows an exemplary image of a trip chain construction performed by the claimed apparatus. There is shown a structure of a trip chain of an exemplary passenger for an instance, in which the passenger uses three different transportation services for the daily commute to work. In this example, the passenger uses a bus service as a first transportation service, a train service as a second transportation service and another bus service as a third transportation service. The trip chain construction can be performed by either using historical usages of a passenger's smart card or a real-time travel itinerary from smart ticketing. For this example, however, historical usage of smart card data is used to construct the trip chain. The passenger validates their smart card when boarding the transportation vehicle of the first transportation service but does not need to validate it when they alight from said vehicle. When the passenger boards and alights the transportation vehicle of the second transportation service they have to validate their smart card for both transportation events. Then the passenger validates their smart card again when boarding the transportation vehicle of the third transportation service but does not need to validate it when they alight from the transportation vehicle when they arrive at the destination of their journey. Accordingly, for a daily commute described in Figure 4, a passenger would need to validate the smart card seven times in order to complete the daily commute. Form the acquired validation data, a trip chain for each passenger of a public transportation service can be reconstructed and saved in the database 1105 to be used as historical travel data.

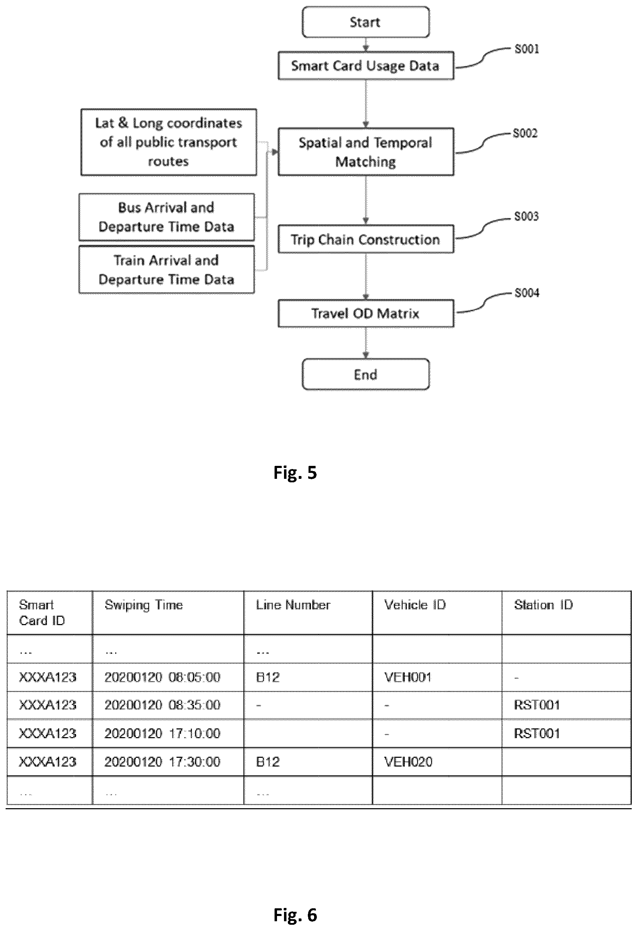

Figure 5 shows the structure of the process for the determination of historical travel demand data from smart card data. As a first step S001 the transfer demand prediction unit 1101 collects smart card usage data from the passengers of a public transportation system stored in the database 1105. In a second step S002 a spatial and temporal matching is performed wherein the coordinates of the routes and stations of available transportation services are matched with the locations where the smart cards of the passengers have been validated and wherein the scheduled arrival and departure times of the different transportation services are matched with the point in time at which the smart cards of the passengers have been validated. Here, the example of a bus and a train is used. However, other transportation means may be used as well. In a third step S003 the trip chain construction as described in Figure 4 is performed. The result of performing a trip chain (re-)construction for all passengers of the public transportation system is then represented S004 as a travel demand for every possible passenger journey that involves travelling between two stations of the same transportation service or between the stations of at least two different transportation services necessitating at least one transfer between said stations. The term "travel OD matrix" may be used for the result of said process as shown in the box related to step S004 in Figure 5.

Figure 6 shows an exemplary table of records of smart card usages used for the trip chain construction. This exemplary table comprises data about: a smart card ID associated with a passenger of a public transportation system, a swiping time of said smart card comprising the date and time of day (time stamp) when the smart card was validated during a passenger journey, a line number representing a transportation service, a vehicle ID representing a transportation vehicle of said transportation service and a station ID representing a station of the transportation service where the validation of the smart card took place. The data comprised in this table is used as historical smart card usage data in the first step S001 of the process for the determination of historical travel demand from smart card data explained in connection with Figure 5. For example, it is shown by Figure 6 that a passenger possessing a smart card with the ID "XXXA123" has swiped the smart card in the morning of day when entering line "B12" and "VEH001" and when leaving the line at station "RST001" and vice versa in the evening of the same day.

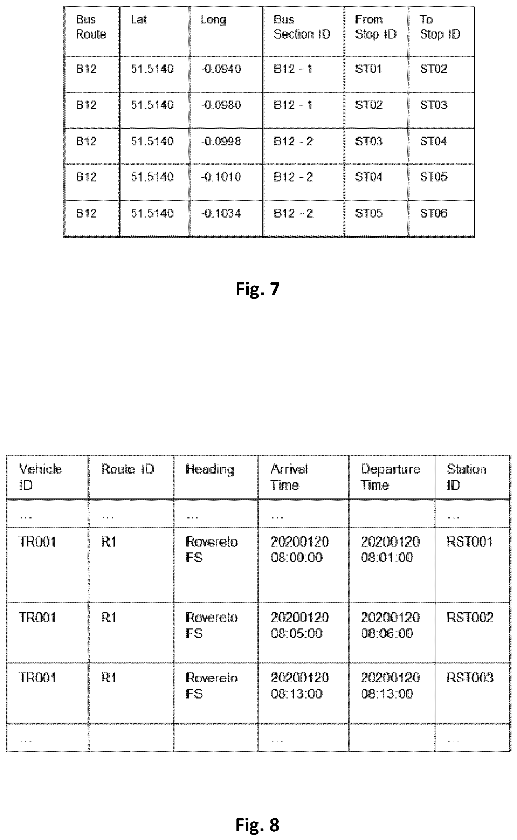

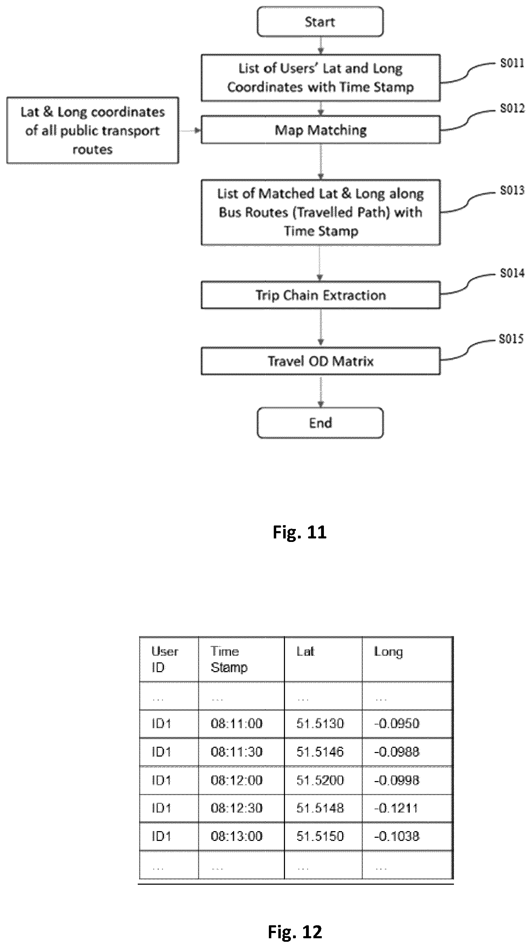

Figure 7 shows an exemplary table of the coordinates of the routes of a public transportation system used for the spatial matching of a passenger journey. In this example the table comprises data about: an identifier of a transportation service, the latitude and the longitude of transportation service sections (position coordinate), an identifier of the transportation service section of the transportation service and markers designating a transportation service section starting point and a transportation section end point in the form a station ID. The data comprised in this table is used for the spatial matching performed in the second step S002 of the process for the determination of historical travel demand from smart card data as well as in the second step of the process for the determination of historical travel demand from be-in-be-out smart ticketing data (described in connection with Figure 11). The coordinates, for example, shown in Figure 7 include the bus route "B12" including the stop IDs and the section IDs between two stops. In the Figure 7 table there are stops with IDs "ST01" to "ST06" listed.

Figure 8 shows an exemplary table of bus and train arrival and departure time records used for the temporal matching of a passenger journey. In this example, the first transportation service is a bus service and the second transportation service is a train service. The table comprises data about: a vehicle ID comprising an identifier of a transportation vehicle, a route ID, an indicator to which final destination the transportation vehicle is heading, an arrival time of the transportation vehicle at a station of the transportation service, a departure time of the transportation vehicle at a station of the transportation service and a station ID designating the station at which arrival and subsequent departure take place. The data comprised in this table is used for the temporal matching performed in the second step S002 of the process for the determination of historical travel demand from smart card data. Figure 8 shows that the table, as an example, holds the data relating to a vehicle with ID "TR001" for the route with ID "R1" heading to the place "Rovereto FS" and three scheduled arrival and departure times in the morning between 08:00 AM and 08:13 AM for three stations "RST001-003".

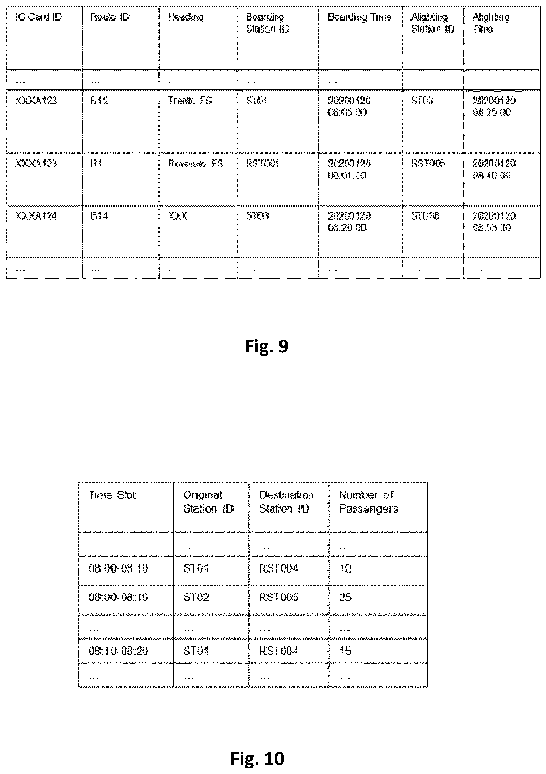

Figure 9 shows an exemplary table of the results of the trip chain construction. The table comprises a smart card ID associated with a passenger, a route ID, an indicator to which final destination the transportation vehicle is heading, a boarding station ID, a boarding time, an identifier of the station where alighting of the passenger from the transportation vehicle of a first transportation service takes place and an alighting time representing the date and the time of day of the passenger alighting the transportation vehicle. The data comprised in this table is used for the trip chain construction performed in the third step S0003 of the process for the determination of historical travel demand from smart card data. Here, the example data show data for a smart card "XXXA123" two times and one time for a smart card "XXXA124" wherein there are two data sets for "XXXA123" which indicate journeys including the routes and transportation services which were used and at which times by the holder of the respective smart card.

Figure 10 shows an exemplary table saved in the database 1105 of the results of the determination of the historical travel demand. In this example, the table comprises a time slot representing a predetermined period of time during the day, an ID of the station representing the starting point of a passenger journey, an ID of the station representing the destination of a passenger journey and the transfer demand value which corresponds to the number of persons using the public transportation system to complete their journey form one station of the public transportation system to the other. Specifically, the example of Figure 10 shows that in different time slots and for different routes/transportation services a different number of passengers are to be expected, like 10, 25 and 15 for the example routes and times of Figure 10.

Figure 11 shows the structure of the process for the determination of historical travel demand data from be-in-be-out smart ticketing data. As a first step S011, the transfer demand prediction unit 1101 generates a list of a passenger's coordinates and corresponding time stamps. In a second step S012, a map matching is performed wherein the coordinates of available transportation services are matched with the passenger's coordinates attained during a passenger journey. In a third step S013, the list of the passengers coordinates which has been matched with the coordinates of the available transportation services in the previous step is now combined with the corresponding time stamps of the passenger journey. In a fourth step S014 a trip chain which has been constructed based on the result of the time resolved map matching of the previous steps is extracted. In a fifth step S015 the travel demand ("travel OD matrix") is determined for every possible passenger journey that involves travelling between two stations of the same transportation service or between the stations of at least two different transportation services necessitating at least one transfer between said stations.

Figure 12 shows an exemplary table of the tracked travel path of a passenger journey acquired by be-in-be-out smart ticketing. The table comprises a user ID associated with a passenger, a time stamp representing the time of day and the lateral and longitudinal coordinates of the passenger for each time stamp. The data comprised in this table is used to generate the list of a passenger's coordinates with corresponding in the first step S011 of the process for the determination of historical travel demand from be-in-be-out smart ticketing data. The example set of data of Figure 12 shows that, e.g., every 30 seconds the position coordinates of the passenger are tracked so that the position, the speed and the like can be determined from the data.

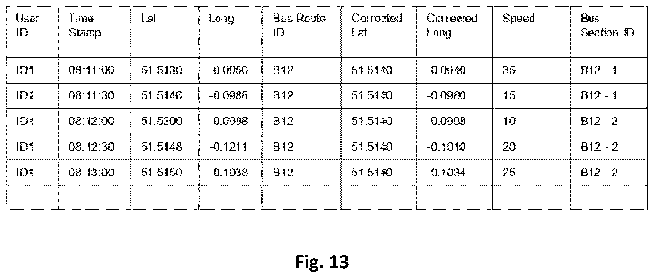

Figure 13 shows an exemplary table of the results of the map matching of the travel path of a passenger journey with the routes of the available transportation systems performed in the third step S013 of the process for the determination of historical travel demand from be-in-be-out smart ticketing data. The table comprises a user ID, a time stamp, the coordinates of the passenger corresponding to the time stamps, a bus route ID, the corrected coordinates of a passenger after map matching with the routes of the available transportation services, a speed value indicating a travelling speed of the passenger which has boarded a transportation vehicle and a transportation section ID identifying the transportation service section on which the passenger currently travels. The example of Figure 13 shows as to how in this example the passenger with "ID1" can be mapped to the route of the bus "B12" so that it can be determined in which section of said bus route the passenger is at what time and how fast the passenger (the bus) moves.

Figure 14 shows a flowchart describing a preferred process of the determination of the transfer demand value between the transportation services of a public transportation system conducted by the transfer demand prediction unit 1101. In a first step S021, the transfer demand prediction unit 1101 extracts the historical travel demand data which was determined according to the process described in Figures 5 and 11, and, preferably, historical weather data from the database 1105 and determines a historical transfer demand value by matching both said data sets (if the weather data set is used). In a second step S022, the transfer demands according to the travel plans of all users are combined with the historical travel demand data and matched with the geographical distances of the transfer station 1000s linking a second transportation service with, for example, a first transportation service and a second transportation service. In a third step S023, the historical travel demand data, the travel plans of all passengers using the public transportation system, the weather data and the geographical distance between transfer station 1000s of the second transportation service are used as input into a trained machine learning unit or an artificial intelligence (AI) trained for the purpose. In a fourth step S024, the transfer demand value is output as a result of the machine learning unit/Al unit.

The determination of the transfer demand value will be further explained according to an example in the following. The following tables show exemplary datasets which may be used during the training of the machine learning unit/Al unit which shall be used in the determination of the transfer demand value.

**Table 1**

| veh ID | day of Week | section ID | route ID | direction | station ID | departure | station ID | arrival | coordinates |
|---|---|---|---|---|---|---|---|---|---|
| 1824 | mon | 187_184 | TR1 | inbound | 187 | 7:20:00 | 184 | 7:23:00 | 11.1546,46.0659; |
| | | | | | | | | | 11.1546,46.0658; |
| | | | | | | | | | ... |
| | | | | | | | | | 11.1519,46.0638 |
| 1824 | mon | 184_216 | TR1 | inbound | 184 | 7:24:00 | 216 | 7:26:00 | 11.1519,46.0638; |
| | | | | | | | | | 11.1520,46.0637; |
| | | | | | | | | | ... |
| | | | | | | | | | 11.1508,46.0619; |
| 1824 | mon | 216_189 | TR1 | inbound | 216 | 7:26:00 | 189 | 7:28:00 | 11.1508,46.0619; |
| | | | | | | | | | 11.1506,46.0618; |
| | | | | | | | | | ... |
| | | | | | | | | | 11.1501,46.0633; |
| 1824 | mon | 189_150 | TR1 | inbound | 189 | 7:28:00 | 150 | 7:50:00 | 11.1501,46.0633; |
| | | | | | | | | | 11.1501,46.0636; |
| | | | | | | | | | ... |
| | | | | | | | | | 11.1463,46.0657 |

Table 1 shows exemplary specifics of a train route TR1 that provides connection to passengers arriving on a bus route 4 to the city centre. This example is taken for Monday, however, larger data sets can be used for any other days, times, routes, etc.

**Table 2**

| date | Day of week | Time slot | boarding stop ID | boarding line ID | alighting station ID | alighting line ID | number of passengers |
|---|---|---|---|---|---|---|---|
| 15-06-20 | mon | 7:00 - 8:00 | 2524 | 4 | 216 | TR1 | 2 |
| 15-06-20 | mon | 7:00 - 8:00 | 2524 | 4 | 189 | TR1 | 1 |
| 15-06-20 | mon | 7:00 - 8:00 | 2524 | 4 | 150 | TR1 | 4 |
| 15-06-20 | mon | 7:00 - 8:00 | 2525 | 4 | 216 | TR1 | 1 |
| 15-06-20 | mon | 7:00 - 8:00 | 2525 | 4 | 189 | TR1 | 3 |
| 15-06-20 | mon | 7:00 - 8:00 | 2525 | 4 | 150 | TR1 | 4 |
| 15-06-20 | mon | 7:00 - 8:00 | 2526 | 4 | 216 | TR1 | 1 |
| 15-06-20 | mon | 7:00 - 8:00 | 2526 | 4 | 189 | TR1 | 1 |
| 15-06-20 | mon | 7:00 - 8:00 | 2526 | 4 | 150 | TR1 | 2 |
| 15-06-20 | mon | 7:00 - 8:00 | 2557 | 4 | 216 | TR1 | 1 |
| 15-06-20 | mon | 7:00 - 8:00 | 2557 | 4 | 189 | TR1 | 1 |
| 15-06-20 | mon | 7:00 - 8:00 | 2557 | 4 | 150 | TR1 | 0 |
| 15-06-20 | mon | 7:00 - 8:00 | 2528 | 4 | 216 | TR1 | 3 |
| 15-06-20 | mon | 7:00 - 8:00 | 2528 | 4 | 189 | TR1 | 2 |
| 15-06-20 | mon | 7:00 - 8:00 | 2528 | 4 | 150 | TR1 | 2 |
| 15-06-20 | mon | 7:00 - 8:00 | 2529 | 4 | 216 | TR1 | 2 |
| 15-06-20 | mon | 7:00 - 8:00 | 2529 | 4 | 189 | TR1 | 2 |
| 15-06-20 | mon | 7:00 - 8:00 | 2529 | 4 | 150 | TR1 | 2 |
| 15-06-20 | mon | 7:00 - 8:00 | 9 | 4 | 216 | TR1 | 1 |
| 15-06-20 | mon | 7:00 - 8:00 | 9 | 4 | 189 | TR1 | 1 |
| 15-06-20 | mon | 7:00 - 8:00 | 9 | 4 | 150 | TR1 | 5 |
| 15-06-20 | mon | 7:00 - 8:00 | 244 | 4 | 216 | TR1 | 1 |
| 15-06-20 | mon | 7:00 - 8:00 | 244 | 4 | 189 | TR1 | 3 |
| 15-06-20 | mon | 7:00 - 8:00 | 244 | 4 | 150 | TR1 | 3 |
| 15-06-20 | mon | 7:00 - 8:00 | 180 | 4 | 216 | TR1 | 1 |
| 15-06-20 | mon | 7:00 - 8:00 | 180 | 4 | 189 | TR1 | 1 |
| 15-06-20 | mon | 7:00 - 8:00 | 180 | 4 | 150 | TR1 | 2 |
| 15-06-20 | mon | 7:00 - 8:00 | 182 | 4 | 216 | TR1 | 3 |
| 15-06-20 | mon | 7:00 - 8:00 | 182 | 4 | 189 | TR1 | 3 |
| 15-06-20 | mon | 7:00 - 8:00 | 182 | 4 | 150 | TR1 | 3 |
| 15-06-20 | mon | 7:00 - 8:00 | 191 | 4 | 216 | TR1 | 0 |
| 15-06-20 | mon | 7:00 - 8:00 | 191 | 4 | 189 | TR1 | 0 |
| 15-06-20 | mon | 7:00 - 8:00 | 191 | 4 | 150 | TR1 | 0 |
| ... | | ... | ... | ... | ... | ... | ... |

Table 2 shows historical data of passengers boarding and alighting at each stop between a pair of transportation services.

**Table 3**

| date | day of week | Time slot | transfer from route ID | transfer to route ID | transfer station 1000 ID | number of passengers |
|---|---|---|---|---|---|---|
| 15-06-20 | mon | 7:00 - 8:00 | 4_Inbound | TR1_Inbound | 187 | 61 |

Table 3 shows the result of the extraction of the transfer demand between bus 4 and train TR1 during the period from 7:00 - 8:00 am from the historical travel demand shown in table 2 above.

**Table 4**

| date | day of week | time slot | transfer from route ID | transfer to route ID | transfer station 1000 ID | number of passengers |
|---|---|---|---|---|---|---|
| 15-06-20 | mon | 6:00 - 7:00 | 4_Inbound | TR1_Inbound | 187 | 7 |
| 15-06-20 | mon | 6:00 - 7:00 | 5_Inbound | TR1_Inbound | 184 | 5 |
| 15-06-20 | mon | 6:00 - 7:00 | 6_Outbound | TR3_Outbound | 3333 | 3 |
| 15-06-20 | mon | 6:00 - 7:00 | 7_ Outbound | TR4_Outbound | 4444 | 2 |
| 15-06-20 | mon | 7:00 - 8:00 | 4_Inbound | TR1_Inbound | 187 | 61 |
| 15-06-20 | mon | 7:00 - 8:00 | 5_Inbound | TR1_Inbound | 184 | 15 |
| 15-06-20 | mon | 7:00 - 8:00 | 6_Outbound | TR3_Outbound | 3333 | 20 |
| 15-06-20 | mon | 7:00 - 8:00 | 7_ Outbound | TR4_Outbound | 4444 | 12 |
| .. | | .. | .. | .. | | .. |
| 16-06-20 | tue | .. | .. | .. | | .. |
| ... | | ... | .. | .. | | .. |

Table 4 shows transfer demand between other services than bus 4 and train TR1 for different time slots on different dates.

**Table 5**

| date | day of week | time slot | temperature | rain |
|---|---|---|---|---|
| 15-06-20 | mon | 6:00 - 7:00 | 23 | 10 |
| 15-06-20 | mon | 7:00 - 8:00 | 24 | 10 |
| 15-06-20 | mon | 8:00 - 9:00 | 25 | 12 |
| .. | | .. | .. | .. |
| 16-06-20 | tue | .. | .. | .. |
| ... | | ... | .. | .. |

Table 5 shows an exemplary dataset for weather data used to train the machine learning unit.

**Table 6**

| from station ID | to station ID | distance |
|---|---|---|
| 187 | 184 | 800 |
| 187 | 3333 | 1200 |
| 187 | 4444 | 2000 |
| 184 | 3333 | 1000 |
| 184 | 4444 | 1800 |
| 3333 | 4444 | 2000 |
| ... | ... | ... |

Table 6 shows a matrix of geographical distances between stations of a public transportation system.

**Table 7**

| date | day of week | time slot | transfer from route ID | transfer to route ID | transfer station 1000 ID | number of passengers |
|---|---|---|---|---|---|---|
| 14-06-21 | mon | 6:00 - 7:00 | 4_Inbound | TR1_Inbound | 187 | 6 |
| 14-06-21 | mon | 6:00 - 7:00 | 5_Inbound | TR1_Inbound | 184 | 7 |
| 14-06-21 | mon | 6:00 - 7:00 | 6_Outbound | TR3_Outbound | 3333 | 5 |
| 14-06-21 | mon | 6:00 - 7:00 | 7_ Outbound | TR4_Outbound | 4444 | 3 |

Table 7 shows an exemplary number of passengers having transferred form one transportation service to the other according to historical data from smart ticketing.

**Table 8**

| date | day of week | time slot | temperature | rain |
|---|---|---|---|---|
| ... | | ... | ... | ... |
| 14-06-21 | mon | 5:00 - 6:00 | 18 | 0 |
| 14-06-21 | mon | 6:00 - 7:00 | 25 | 0 |

Table 8 shows exemplary current date weather readings.

**Table 9**

| date | day of week | time slot | transfer from route ID | transfer to route ID | transfer station 1000 ID | number of passengers |
|---|---|---|---|---|---|---|
| 14-06-21 | mon | 7:00 - 8:00 | 4_Inbound | TR1_Inbound | 187 | 65 |
| 14-06-21 | mon | 7:00 - 8:00 | 5_Inbound | TR1_Inbound | 184 | 18 |
| 14-06-21 | mon | 7:00 - 8:00 | 6_Outbound | TR3_Outbound | 3333 | 24 |
| 14-06-21 | mon | 7:00 - 8:00 | 7_ Outbound | TR4_Outbound | 4444 | 15 |
| 14-06-21 | mon | 8:00 - 9:00 | 4_Inbound | TR1_Inbound | 187 | 75 |
| 14-06-21 | mon | 8:00 - 9:00 | 5_Inbound | TR1_Inbound | 184 | 30 |
| 14-06-21 | mon | 8:00 - 9:00 | 6_Outbound | TR3_Outbound | 3333 | 24 |
| 14-06-21 | mon | 8:00 - 9:00 | 7_ Outbound | TR4_Outbound | 4444 | 20 |
| .. | .. | .. | .. | .. | .. | .. |

Table 9 shows a result of the determination of the transfer demand based on the machine learning process.

The above tables 1 to 9 represent brief examples of datasets which may be used for the training of the machine learning unit/Al unit and of course more/larger datasets may be used and the training process may be repeated with many corresponding datasets a plurality of times.

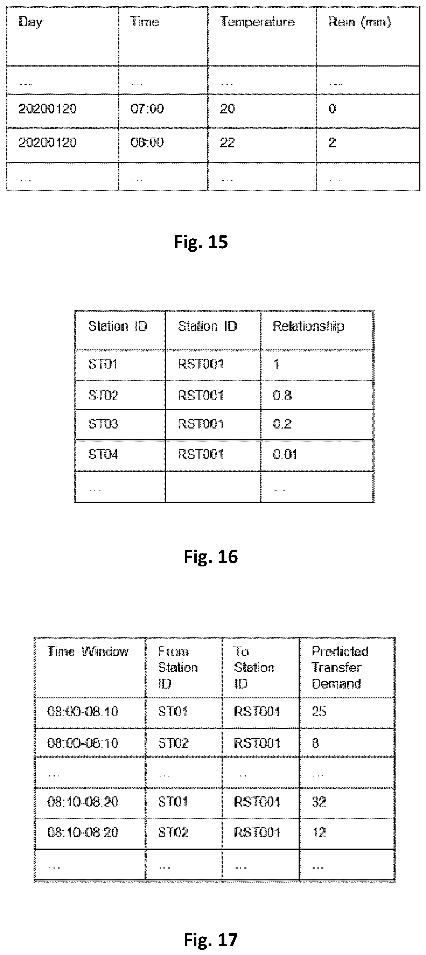

Figure 15 shows an exemplary table of historical weather data used in the determination of the transfer demand value. The table comprises a date, a time of day, a temperature value corresponding to the time of date and day and a precipitation value corresponding to the date and time of day. The data comprised in this table is used in the determination of the historical transfer demand in step S021 of the process for transfer demand prediction.

Figure 16 shows an exemplary table of the geographical distances between stations of a first transportation service and stations of a second transportation service used in the determination of the transfer demand value. The table comprises a station ID of stations of a first transportation service, a station ID of a station of a second transportation service and the geographical distance between stations of a first transportation service and stations of a second transportation service. The data comprised in the table is used in the second step S022 of the process for the determination of the transfer demand value. The value for "relationship" is considered to have the unit of a distance/length, preferably.

Figure 17 shows an exemplary table of the results of the transfer demand prediction between stations of a first transportation service and stations of a second transportation service. The table comprises a time slot representing a predetermined interval during the day, a station ID of a station of a first transportation service representing the starting point of a passenger journey, a station ID of a station of a second transportation service representing the end point of a passenger journey and a transfer demand value determined by the transfer demand prediction unit.

Figure 18 shows a flowchart describing the algorithm of arrival time prediction conducted by the arrival time prediction unit 1102. In a first step S031, the arrival time prediction unit receives the coordinates and the corresponding time stamps from the passengers' mobile devices 1200. In a second step S032 and third step S033, the arrival time prediction unit 1102 conducts map matching of the passenger coordinates and the corresponding time stamps with schedule data and the coordinates of available transportation routes acquired form the database in order to identify the transportation service a particular passenger uses and the transportation vehicle the passenger is aboard. In a fourth step S034, the travel time on a previous transportation service section and historical travel times on said transportation service section extracted from the database 1105 and the geographical distances corresponding to each transportation service section are combined and input into a trained machine learning unit or AI unit. In a fifth step S035, the trained machine learning unit determines a travel time for the transportation service section lying ahead based on the input data. In a sixth step S036 the trained machine learning unit also determines an arrival time of the transportation vehicle at stations lying ahead of the transportation service section the transportation vehicle currently traverses. In a seventh step S037, the predicted arrival times are output by the arrival time prediction unit 1102.

The determination of the arrival time will be further explained according to an example in the following. The following tables show exemplary datasets which can be used in the training of the trained machine learning unit / AI unit used in the determination of the arrival time.

**Table 10**

| Veh ID | Day of Week | Sectio n ID | Route ID | Directio n | stoplD _start | Departure Time | stopID _end | Arrival Time | coordinates |
|---|---|---|---|---|---|---|---|---|---|
| 1824 | mon | 2524_ 2525 | 4 | inb oun d | 2524 | 7:00:00 | 2525 | 7:03:00 | 11.1846,46. 0676; |
| | | | | | | | | | 11.1846,46. 0675; |
| | | | | | | | | | ... |
| | | | | | | | | | 11.1787,46. 0682 |
| 1824 | mon | 2525_ 2526 | 4 | inbound | 2525 | 7:03:00 | 2526 | 7:05:00 | 11.1787,46. 0682; |
| | | | | | | | | | 11.1785,46. 0682; |
| | | | | | | | | | ... |
| | | | | | | | | | 11.1764,46. 0706 |
| 1824 | mon | 2526_ 2527 | 4 | inbound | 2526 | 7:05:00 | 2527 | 7:07:00 | 11.1764,46. 0706; |
| | | | | | | | | | 11.1764,46. 0707; |
| | | | | | | | | | ... |
| | | | | | | | | | 11.1756,46. 0679 |
| 1824 | mon | 2527_ 2528 | 4 | inbound | 2527 | 7:07:00 | 2528 | 7:08:00 | 11.1756,46. 0679; |
| | | | | | | | | | 11.1754,46. 0677; |
| | | | | | | | | | ... |
| | | | | | | | | | 11.1723,46. 0656 |
| 1824 | mon | 2528_ 2529 | 4 | inbound | 2528 | 7:08:00 | 2529 | 7:09:00 | 11.1723,46. 0656; |
| | | | | | | | | | 11.1687,46. 0659; |
| | | | | | | | | | ... |
| | | | | | | | | | 11.1655,46. 0670 |
| 1824 | mon | 2529_ 9 | 4 | inbound | 2529 | 7:09:00 | 9 | 7:10:00 | 11.1655,46. 0670; |
| | | | | | | | | | 11.1687,46. 0659; |
| | | | | | | | | | ... |
| | | | | | | | | | 11.1655,46. 067 |
| 1824 | mon | 9_244 | 4 | inbound | 9 | 7:10:00 | 244 | 7:11:00 | 11.1655,46. 067; |
| | | | | | | | | | 11.1611,46. 069; |
| | | | | | | | | | |
| | | | | | | | | | 11.1608,46. 0672 |
| 1824 | mon | 244_1 80 | 4 | inbound | 244 | 7:11:00 | 180 | 7:12:00 | 11.1608,46. 0672; |
| | | | | | | | | | 11.1611,46. 0691; |
| | | | | | | | | | |
| | | | | | | | | | 11.1608,46. 0672 |
| 1824 | mon | 180_1 82 | 4 | inbound | 180 | 7:12:00 | 182 | 7:13:00 | 11.1608,46. 0672; |
| | | | | | | | | | 11.1607,46. 0671; |
| | | | | | | | | | |
| | | | | | | | | | 11.1596,46. 0655 |
| 1824 | mon | 182_1 91 | 4 | inbound | 182 | 7:13:00 | 191 | 7:14:00 | 11.1596,46. 0655; |
| | | | | | | | | | 11.1595,46. 0654; |
| | | | | | | | | | |
| | | | | | | | | | 11.1579,46. 0656 |
| 1824 | mon | 191_1 87 | 4 | inbound | 191 | 7:14:00 | 187 | 7:15:00 | 11.1579,46. 0656; |
| | | | | | | | | | 11.1578,46. 0656; |
| | | | | | | | | | |
| | | | | | | | | | 11.1546,46. 0659 |

Table 10 shows the specifics of bus route 4 that provides connection to train route 1.

**Table 11**

| date | day of week | timestamp | user ID | | seq | Ion | lat |
|---|---|---|---|---|---|---|---|
| 14-06-21 | mon | 7:10:00 | ID1 | | 1 | 11.16112 | 46.06914 |
| 14-06-21 | mon | 7:10:00 | ID1 | | 2 | 11.16112 | 46.06914 |
| 14-06-21 | mon | 7:10:07 | ID1 | | 3 | 11.16102 | 46.06896 |
| 14-06-21 | mon | 7:10:21 | ID1 | | 4 | 11.16111 | 46.0686 |
| 14-06-21 | mon | 7:10:28 | ID1 | | 5 | 11.16131 | 46.06847 |
| 14-06-21 | mon | 7:10:44 | ID1 | | 6 | 11.16183 | 46.06825 |
| 14-06-21 | mon | 7:10:50 | ID1 | | 7 | 11.16191 | 46.0681 |
| 14-06-21 | mon | 7:10:57 | ID1 | | 8 | 11.16178 | 46.06793 |
| 14-06-21 | mon | 7:11:50 | ID1 | | 9 | 11.16047 | 46.06695 |
| 14-06-21 | mon | 7:12:15 | ID1 | | 10 | 11.15992 | 46.06643 |

Table 11 shows an example for a passenger GPS log. The passenger with the ID1 is on bus #1824 which just arrived at Stop 182. The passenger has been tracked since the boarding of the bus on location sequence 1.

**Table 12**

| date | day of week | timestamp | user ID | seq | Ion | lat | veh ID | section ID | section traverse time (sec) |
|---|---|---|---|---|---|---|---|---|---|
| 14-06-21 | mon | 7:10:00 | ID1 | 1 | 11.16112 | 46.06914 | 1824 | 244_180 | |
| 14-06-21 | mon | 7:10:00 | ID1 | 2 | 11.16112 | 46.06914 | 1824 | 244_180 | |
| 14-06-21 | mon | 7:10:07 | ID1 | 3 | 11.16102 | 46.06896 | 1824 | 244_180 | |
| 14-06-21 | mon | 7:10:21 | ID1 | 4 | 11.16111 | 46.0686 | 1824 | 244_180 | |
| 14-06-21 | mon | 7:10:28 | ID1 | 5 | 11.16131 | 46.06847 | 1824 | 244_180 | |
| 14-06-21 | mon | 7:10:44 | ID1 | 6 | 11.16183 | 46.06825 | 1824 | 244_180 | |
| 14-06-21 | mon | 7:10:50 | ID1 | 7 | 11.16191 | 46.0681 | 1824 | 244_180 | |
| 14-06-21 | mon | 7:10:57 | ID1 | 8 | 11.16178 | 46.06793 | 1824 | 244_180 | 57 |
| 14-06-21 | mon | 7:11:50 | ID1 | 9 | 11.16047 | 46.06695 | 1824 | 180_182 | |
| 14-06-21 | mon | 7:12:15 | ID1 | 10 | 11.15992 | 46.06643 | 1824 | 180_182 | 78 |

Table 12 shows an example for map matching wherein the location of a passenger is matched to the ID of a transportation vehicle and a transportation service section while referring to the coordinates and the corresponding time stamp of the passenger and the schedule data of the public transportation system.

**Table 13**

| date | day of week | veh ID | timestamp | route ID | section ID | section traverse time |
|---|---|---|---|---|---|---|
| 15-06-20 | mon | 1888 | 7:10:41 | 4 | 244_180 | 58 |
| 15-06-20 | mon | 1888 | 7:11:39 | 4 | 180_182 | 61 |
| 15-06-20 | mon | 1888 | 7:12:40 | 4 | 182_191 | 110 |
| 15-06-20 | mon | 1888 | 7:14:30 | 4 | 191_187 | 104 |
| 15-06-20 | mon | 1889 | 8:11:10 | 4 | 244_180 | 62 |
| 15-06-20 | mon | 1889 | 8:12:12 | 4 | 180_182 | 71 |
| 15-06-20 | mon | 1889 | 8:13:23 | 4 | 182_191 | 120 |
| 15-06-20 | mon | 1889 | 8:15:23 | 4 | 191_187 | 140 |
| 15-06-20 | mon | 1890 | 9:11:01 | 4 | 244_180 | 60 |
| 15-06-20 | mon | 1890 | 9:12:01 | 4 | 180_182 | 62 |
| 15-06-20 | mon | 1890 | 9:13:03 | 4 | 182_191 | 58 |
| 15-06-20 | mon | 1890 | 9:14:01 | 4 | 191_187 | 57 |
| .. | .. | .. | .. | .. | .. | .. |
| 16-06-20 | tue | .. | .. | .. | .. | .. |
| .. | .. | | .. | .. | .. | .. |

Table 13 shows an example of historical travel times of a transportation vehicle of the first transportation service.

**Table 14**

| Section ID | section traverse time |
|---|---|
| 182_191 | 88 |
| 191_187 | 64 |

Table 14 shows an example of travel times for subsequent transportation service sections 182_191 and 191_187 by the machine learning model after the passenger has traversed the previous sections 244_180 and 180_182

**Table 15**

| date | day of Week | current time | veh ID | route ID | direction | to stop ID | scheduled arrival time | expected arrival time |
|---|---|---|---|---|---|---|---|---|
| 14-06-21 | mon | 7:12:15 | 1824 | 4 | inbound | 191 | 7:14:00 | 7:13:43 |
| 14-06-21 | mon | 7:12:15 | 1824 | 4 | inbound | 187 | 7:15:00 | 7:14:47 |

Table 15 shows the estimation of the arrival time of after the machine learning model has determined the travel time it would take the transportation vehicle to traverse the above-shown subsequent transportation service sections.

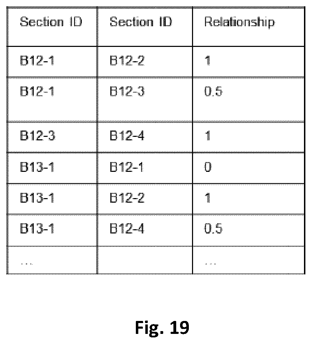

Figure 19 shows an exemplary table of geographical distances between the transportation service sections of a first transportation service used in the arrival time prediction. The table comprises a section ID of a first transportation service section, a section ID of a second transportation service section and a geographical distance between the first transportation service section and the second transportation service section. The data comprised in this table is used in step four of the algorithm for arrival time prediction.

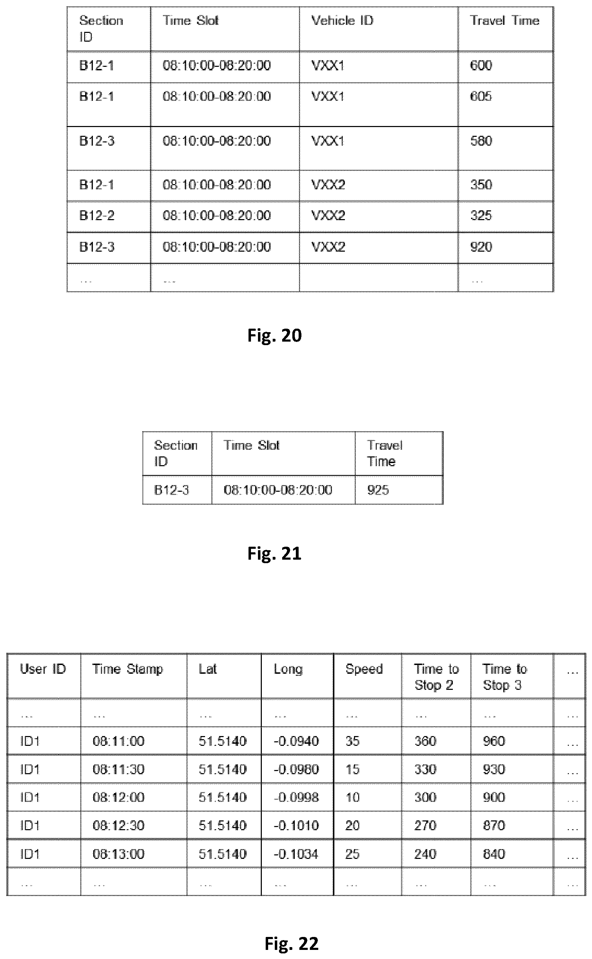

Figure 20 shows an exemplary table of the extracted travel times of each transportation service section of a first transportation service used in the arrival time prediction. The table comprises a transportation service section ID, a time slot representing a predetermined interval during the day, a transportation vehicle ID and a travel time which represents the time the transportation vehicle took to travel on the respective transportation service section. The data comprised in this table is used in step four of the algorithm for arrival time prediction.

Figure 21 shows an exemplary table of the predicted travel time of a given transportation service section of a first transportation service. The table comprises a transportation service section ID, a time slot representing a predetermined interval during the day and predicted travel time of a transportation vehicle on the respective transportation service section.

Figure 22 shows an exemplary table of the predicted arrival time of each passenger travelling by a transportation vehicle at each of the subsequent stops of the corresponding transportation service. The table comprises a user ID associated with a passenger, a time stamp, the current coordinates of a passenger corresponding to the time stamp, a travelling speed of the passenger aboard the transportation vehicle and an indicator for the time until arrival at each subsequent stop of the transportation service.

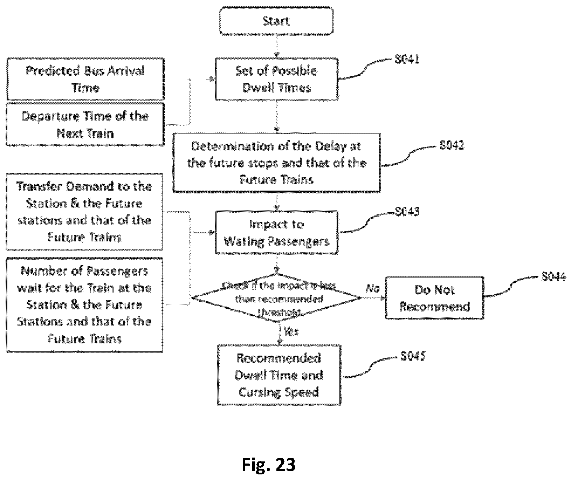

Figure 23 shows a flowchart describing the algorithm of a dwell time determination conducted by the dwell time analysis unit 1103. In a first step S041, the dwell time analysis unit determines a set of possible dwell times from the predicted arrival time of a vehicle of a first transportation service at a transfer station 1000 between the first transportation service and the second transportation service and the departure time of a transportation vehicle of a second transportation service at said transfer station 1000. In a second step S042, there is determined the delay of the transportation vehicle of the second transportation service and the delay of other transportation vehicles of the second transportation service if an extended dwell time and/or reduced cruising speed of the transportation vehicle is implemented. In a third step S043, the impact parameter, representing the impact on passengers aboard on or waiting for a transportation vehicle of the second transportation service caused by the dwelling time and/or cruising speed, is determined. This step is performed using the transfer demand value at the transfer station 1000, the transfer demand value at stations subsequent to the impending transfer station 1000 and the transfer demand value of trains reaching the impending transfer station 1000 subsequently to the transportation vehicle. The respective transfer demand values have been previously determined by the transfer demand prediction unit as described in Figure 14. In a fourth step S044, the dwell time analysis unit 1103 may determine if a value of the impact parameter is above or below a predetermined threshold value. In a fifth step S045, if the value lies above the predetermined threshold value, recommendation data comprising a dwell time and/or a cruising speed is not issued. If the value lies below the predetermined threshold recommendation data comprising a dwell time and/or a cruising speed is issued. For the case in which the public transportation system is controlled in a fully automated manner, the dwell time and/or cruising speed may directly be implemented. For the case in which the recommended dwell time and/or cruising speed are send to the vehicle operator interface in the form of recommendation data, the train operator is to decide whether to implement the dwell time and/or cruising speed.

The impact parameter may be represented by a (total) cost parameter or value of said cost parameter, respectively. The cost parameter may be calculated based on assumed costs of different parts of the system which may be summed up to determine a total cost parameter value. The parts of the system for which a cost may be calculated may include the passenger's costs and the costs of the transportation service provider. The passenger's costs may be determined by assuming an average value of time for each passenger, e.g., one hour of a passenger may have the value of time of a predefined amount of money. The predefined amount may be defined based on the average amount of money a person makes per hour in said country or the like. Based on the average value of time of the passengers different costs may be calculated and summed up, such as waiting costs caused by a missed connection, increased travelling costs due to travelling delays, transfer costs, and the like. Furthermore, it is possible to compare the passenger's costs with the default condition, i.e. the increase of costs compared to the scheduled time table/travelling plan can be calculated instead of the absolute costs. Furthermore, the provider costs may be calculated in analogy to the passenger's costs wherein the average time value may be assumed or predefined based on the providers average cash flow per hour or the average operational costs per hour, or the like. In case that a delay or an adaption of the dwell time would lead to a number of passenger's missing a connection the impact thus could be represented by the total cost parameter value; e.g. by multiplying the number of passengers with the increased travelling time and with the average time value. The same could be carried out for the provider of the transportation service, e.g. the provider may have additional costs due to providing additional service persons, additional vehicles or the like. If the total costs of the provider are known or can be determined otherwise, the value can also be calculated without using the time value of the provider explained above. Based on the above explained calculation of the total cost parameter value, which may be a sum of the sum of the passenger's costs and a sum of the provider's costs which are caused by an increased dwell time, a reduced travelling speed, a delay or the like, the impact, i.e. the impact parameter, can be determined. Preferably, the impact parameter is the total costs parameter and the higher said total costs parameter value the higher the (unwanted) impact which is caused by a change of the travelling speed and/or the dwell time. Therefore, a threshold may be set in advance which shall indicate the maximum acceptable impact and the recommendation for adapting the travelling speed and/or the dwell time may be decided based on the comparison of the total costs/impact parameter value and the threshold value. Another option for issuing a recommendation for adapting the travelling speed and/or the dwell time may be that the dwell time analysis unit determines a set of different dwell times and calculates the total costs parameter values for each dwell time (and/or travelling speed). If it should be found that the total cost parameter value for one of the adapted dwell times (and/or travelling speeds) should be below the value of the travelling plan without an adaption of the dwell time, e.g. when a delay of a transportation vehicle has occurred, it may also cause that a recommendation is issued. In other words, the adaption of the dwell time and/or the travelling speed as determined by the dwell time analysis unit shall minimize the total cost parameter value.

Furthermore, if the dwell time or the travelling/cruising speed of a transportation device shall be adapted, the impact parameter being preferably the total cost parameter is preferably minimized which means that the lowest possible impact parameter value is determined and the corresponding adaption of the dwell time and/or the travelling speed is used for the recommendation.

Summarizing, the present disclosure provides up to a fully automated control of a public transportation system provided by the claimed apparatus which offers the technical effect of more efficient transportation of passengers using a plurality of transportation services in order to complete a journey from a station of a first transportation service to a station of a second transportation service which involves a transfer between said transportation services.

Moreover, the claimed apparatus, system and corresponding method enable a more efficient use of the transportation capacity of the transportation vehicles by avoiding workload peaks when, for example, a plurality of passengers that would have missed a transportation vehicle of the second transportation service because of a delay in the operation of the first transportation service are able to reach the transportation vehicle of the second transportation service due to an extended dwell time of said transportation vehicle in a transfer station 1000. Furthermore, as the workload of transportation vehicles of the second transportation service can hence be equalized by the claimed apparatus, the reduction of workload peaks caused by delays of the first transportation service results in reduced wear and tear of the of the transportation vehicles.

This offers also the advantage that disruptions in the scheduled operation of the controlled system for public transportation are mitigated by the dwell time determination according to the claimed subject-matter.

As will be appreciated by one of skill in the art, the present disclosure, as described hereinabove and the accompanying figures, may be embodied as a method, an apparatus (including a device, machine, system, computer program product, and/or any other apparatus), or a combination of the foregoing.

Accordingly, embodiments of the present disclosure may take the form of an entirely hardware embodiment, an entirely software embodiment (including firmware, resident software, micro-code, etc.), or an embodiment combining software and hardware aspects that may generally be referred to herein as a "system". Furthermore, embodiments of the present disclosure may take the form of a computer program product on a computer-readable medium having computer-executable program code embodied in the medium.

It should be noted that arrows may be used in drawings to represent communication, transfer, or other activity involving two or more entities. Double-ended arrows generally indicate that activity may occur in both directions (e.g., a command/request in one direction with a corresponding reply back in the other direction, or peer-to-peer communications initiated by either entity), although in some situations, activity may not necessarily occur in both directions.

Single-ended arrows generally may indicate activity exclusively or predominantly in one direction, although it should be noted that, in certain situations, such directional activity actually may involve activities in both directions (e.g., a message from a sender to a receiver and an acknowledgement back from the receiver to the sender, or establishment of a connection prior to a transfer and termination of the connection following the transfer). Thus, the type of arrow used in a particular drawing to represent a particular activity is exemplary and should not be seen as limiting.

Aspects are described hereinabove with reference to flowchart illustrations and/or block diagrams of methods and apparatuses, and with reference to a number of sample views of a graphical user interface generated by the methods and/or apparatuses. It will be understood that each block of the flowchart illustrations and/or block diagrams, and/or combinations of blocks in the flowchart illustrations and/or block diagrams, as well as the graphical user interface, can be implemented by computer-executable program code.

The computer-executable program code may be provided to a processor of a general purpose computer, special purpose computer, or other programmable data processing apparatus to produce a particular machine, such that the program code, which executes via the processor of the computer or other programmable data processing apparatus, create means for implementing the functions/acts/outputs specified in the flowchart, block diagram block or blocks, figures, and/or written description.

These computer-executable program code may also be stored in a computer-readable memory that can direct a computer or other programmable data processing apparatus to function in a particular manner, such that the program code stored in the computer readable memory produce an article of manufacture including instruction means which implement the function/act/output specified in the flowchart, block diagram block(s), figures, and/or written description.

The computer-executable program code may also be loaded onto a computer or other programmable data processing apparatus to cause a series of operational steps to be performed on the computer or other programmable apparatus to produce a computer-implemented process such that the program code which executes on the computer or other programmable apparatus provides steps for implementing the functions/acts/outputs specified in the flowchart, block diagram block(s), figures, and/or written description. Alternatively, computer program implemented steps or acts may be combined with operator or human implemented steps or acts in order to carry out an embodiment.

It should be noted that terms such as "server" and "processor" may be used herein to describe devices that may be used in certain embodiments and should not be construed to limit to any particular device type unless the context otherwise requires. Thus, a device may include, without limitation, a bridge, router, bridge-router (b-router), switch, node, server, computer, appliance, or other type of device. Such devices typically include one or more network interfaces for communicating over a communication network and a processor (e.g., a microprocessor with memory and other peripherals and/or application-specific hardware) configured accordingly to perform device functions.

Communication networks generally may include public and/or private networks; may include local-area, wide-area, metropolitan-area, storage, and/or other types of networks; and may employ communication technologies including, but in no way limited to, analogue technologies, digital technologies, optical technologies, wireless technologies (e.g., Bluetooth), networking technologies, and internetworking technologies.

It should also be noted that devices may use communication protocols and messages (e.g., messages created, transmitted, received, stored, and/or processed by the device), and such messages may be conveyed by a communication network or medium.

Unless the context otherwise requires, the present disclosure should not be construed as being limited to any particular communication message type, communication message format, or communication protocol. Thus, a communication message generally may include, without limitation, a frame, packet, datagram, user datagram, cell, or other type of communication message.

Unless the context requires otherwise, references to specific communication protocols are exemplary, and it should be understood that alternative embodiments may, as appropriate, employ variations of such communication protocols (e.g., modifications or extensions of the protocol that may be made from time-to-time) or other protocols either known or developed in the future.

It should also be noted that logic flows may be described herein to demonstrate various aspects and should not be construed to limit the disclosure to any particular logic flow or logic implementation. The described logic may be partitioned into different logic blocks (e.g., programs, modules, functions, or subroutines) without changing the overall results.

Often times, logic elements may be added, modified, omitted, performed in a different order, or implemented using different logic constructs (e.g., logic gates, looping primitives, conditional logic, and other logic constructs) without changing the overall results.

The present disclosure may be embodied in many different forms, including, but in no way limited to, computer program logic for use with a processor (e.g., a microprocessor, microcontroller, digital signal processor, or general purpose computer), programmable logic for use with a programmable logic device (e.g., a Field Programmable Gate Array (FPGA) or other PLD), discrete components, integrated circuitry (e.g., an Application Specific Integrated Circuit (ASIC)), or any other means including any combination thereof Computer program logic implementing some or all of the described functionality is typically implemented as a set of computer program instructions that is converted into a computer executable form, stored as such in a computer readable medium, and executed by a microprocessor under the control of an operating system. Hardware-based logic implementing some or all of the described functionality may be implemented using one or more appropriately configured FPGAs.

Computer program logic implementing all or part of the functionality previously described herein may be embodied in various forms, including, but in no way limited to, a source code form, a computer executable form, and various intermediate forms (e.g., forms generated by an assembler, compiler, linker, or locator).

Source code may include a series of computer program instructions implemented in any of various programming languages (e.g., an object code, an assembly language, or a high-level language such as Fortran, C, C++, JAVA, or HTML) for use with various operating systems or operating environments. The source code may define and use various data structures and communication messages. The source code may be in a computer executable form (e.g., via an interpreter), or the source code maybe converted (e.g., via a translator, assembler, or compiler) into a computer executable form.

Computer-executable program code for carrying out operations of embodiments of the present disclosure may be written in an object oriented, scripted or unscripted programming language such as Java, Perl, Smalltalk, C++, or the like. However, the computer program code for carrying out operations of embodiments may also be written in conventional procedural programming languages, such as the "C" programming language or similar programming languages.

Computer program logic implementing all or part of the functionality previously described herein may be executed at different times on a single processor (e.g., concurrently) or may be executed at the same or different times on multiple processors and may run under a single operating system process/thread or under different operating system processes/threads.

Thus, the term "computer process" may refer generally to the execution of a set of computer program instructions regardless of whether different computer processes are executed on the same or different processors and regardless of whether different computer processes run under the same operating system process/thread or different operating system processes/threads.

The computer program may be fixed in any form (e.g., source code form, computer executable form, or an intermediate form) either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), a PC card (e.g., PCMCIA card), or other memory device.

The computer program may be fixed in any form in a signal that is transmittable to a computer using any of various communication technologies, including, but in no way limited to, analog technologies, digital technologies, optical technologies, wireless technologies (e.g., Bluetooth), networking technologies, and internetworking technologies.

The computer program may be distributed in any form as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web).

Hardware logic (including programmable logic for use with a programmable logic device) implementing all or part of the functionality previously described herein may be designed using traditional manual methods, or may be designed, captured, simulated, or documented electronically using various tools, such as Computer Aided Design (CAD), a hardware description language (e.g., VHDL or AHDL), or a PLD programming language (e.g., PALASM, ABEL, or CUPL).

Any suitable computer readable medium may be utilized. The computer readable medium may be, for example but not limited to, an electronic, magnetic, optical, electromagnetic, infrared, or semiconductor system, apparatus, device, or medium.

More specific examples of the computer readable medium include, but are not limited to, an electrical connection having one or more wires or other tangible storage medium such as a portable computer diskette, a hard disk, a random access memory (RAM), a read-only memory (ROM), an erasable programmable read-only memory (EPROM or Flash memory), a compact disc read-only memory (CD-ROM), or other optical or magnetic storage device.

Programmable logic may be fixed either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), or other memory device.

The programmable logic may be fixed in a signal that is transmittable to a computer using any of various communication technologies, including, but in no way limited to, analogue technologies, digital technologies, optical technologies, wireless technologies (e.g., Bluetooth), networking technologies, and internetworking technologies.

The programmable logic may be distributed as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web). Of course, some aspects may be implemented as a combination of both software (e.g., a computer program product) and hardware. Still other embodiments of the may be implemented as entirely hardware, or entirely software.

While certain exemplary aspects have been described and shown in the accompanying drawings, it is to be understood that such aspects are illustrative, and that the embodiments are not limited to the specific constructions and arrangements shown and described. The scope of the invention is defined by the appended claims.

## Claims

1. A control apparatus for a public transportation system, comprising:
a database (1105) configured to store historical travel data of passengers using the transportation services;
a transfer demand prediction unit (1101) configured to receive a travel plan (1201) from each of a plurality of mobile devices (1200) of passengers using a transportation service, and to determine, as a transfer demand value, a number of passengers which are about to transfer between a first and a second transportation service based on the received travel plan (1201) and the historical travel data;
an arrival time prediction unit (1102) configured to predict an arrival time of a transportation vehicle of a first transportation service at a station for transferring between the first transportation service and a second transportation service,
a dwell time analysis unit (1103) configured to receive the transfer demand value from the transfer demand prediction unit (1102) and the predicted arrival times of one or more first transportation vehicles from the arrival time prediction unit (1102), and determine a cruising speed of the transportation vehicle and/or one or more dwell times of the second transportation service in a station based on the predicted arrival times,
wherein the dwell time analysis unit (1103) is further configured to issue recommendation data to a transportation vehicle operator (1300) based on which a dwell time of the transportation vehicle of a second transportation service and/or a cruising speed of a transportation vehicle can be selected, wherein the transportation vehicle operator (1300) is a human operator and/or a computer-based control entity, and
in case the transportation vehicle operator (1300) is a human operator, the control apparatus includes a graphic user interface which is configured to display the recommendation data and prompt the human operator to select a dwell time and/or a cruising speed; or
in case the transportation vehicle operator (1300) is a computer-based control entity, the transportation vehicle operator (1300) receives the recommendation data and issues a control signal to a transportation vehicle including to apply the dwell time and/or the cruising speed.

2. The control apparatus according to claim 1,
wherein the database (1105) further includes coordinates of routes and stations and schedule data of available transportation services, and historical arrival and departure times of the transportation services, and
the control apparatus includes a travel demand prediction unit (1101A) which is configured to receive the historical travel data and the coordinates of routes and stations, and historical arrival and departure times of the transportation services from the database (1105), and
the travel demand prediction unit (1101A) is further configured to generate a travel origin-destination (OD) matrix including the historical passenger journeys by matching the historical travel data with the coordinates of routes and stations, and/or the historical arrival and departure times of the transportation services.

3. The control apparatus according to claim 2, wherein the historical travel data include data from smart cards or mobile devices of a passenger which include location information and time stamps for each location of the passenger along an entire journey and/or the historical data include data from a be-in/be-out smart ticket which include the passenger's locations and time stamps at the time of entering and exiting a transportation system.

4. The control apparatus according to claim 2 or 3, wherein the transfer demand prediction unit (1101) includes a trained machine learning unit which receives, as an input, the travel OD matrix data and actual transfer demands from passengers to generate the transfer demand value.

5. The control apparatus according to claim 4, wherein the transfer demand prediction unit (1101) further receives data about geographical distances between stations of different transportation services which are stored in the database (1105), and
the trained machine learning unit uses the geographical distances as a further input to determine the transfer demand value.

6. The control apparatus according to at least one of the previous claims 4 to 5,
wherein the database (1105) is further configured to store weather information, and
the trained machine learning unit of the transfer demand prediction unit (1102) is further configured to estimate the transfer demand value between each station of the first transportation service and each station of the second transportation service based on the additional information relating to the weather information.

7. The control apparatus according to at least one of the previous claims, wherein the arrival time prediction unit (1102) is configured to
- receive location information (1202) and time stamps from a plurality of mobile devices of passengers using a transportation service and to match them to coordinates of routes and stations and schedule data of available transportation services stored in the database (1105), and
- the arrival time prediction unit (1102) includes a trained machine learning unit which is configured to evaluate actual travel times of the transportation service based on the location information from the plurality of mobile devices, to evaluate the travel times of the transportation service based on historical travel data and to estimate a predicted arrival time at the next stations of the transportation service.

8. The control apparatus according claim 1, further configured to determine a delay which is related to a dwell time or a cruising speed determined by the dwell time analysis unit (1103), wherein
the delay includes the delay time of the transportation vehicle at the stations of the second transportation service, the delay of passengers inside the transportation vehicle and/or the delay time of other transportation vehicles of the second transportation service, and
in case the delay is below a predefined threshold, the dwell time analysis unit (1103) is configured to generate recommendation data including a recommendation to select a dwell time and/or a cruising speed.

9. The control apparatus according claims 1 or 8, further configured to determine an impact parameter which is related to a total cost parameter, wherein
in case the impact parameter is below a predefined threshold, the dwell time analysis unit (1103) is configured to generate recommendation data including a recommendation to select a dwell time and/or a cruising speed.

10. The control apparatus according to at least one of the previous claims,
wherein the apparatus further comprises a feedback departure time update unit (1104) configured to receive an updated departure time of the transportation vehicle of the second transportation service from the operator (1300) of a said transportation vehicle and send the updated departure time to the plurality of passenger devices (1200).

11. A transportation system comprising:
a plurality of passenger mobile devices (1200) configured to transmit a travel plan (1201) and location information (1202) including time stamps of a passenger using a transportation service;
a back-end server system (1100) configured to communicate with the plurality of passenger mobile devices and an operator (1300) or a computer-based control unit;
the back-end server system (1100) comprising a control apparatus according to at least one of the claims 1 to 10.

12. A method for determining an adapted departure time comprising:
receiving a travel plan (1201) and location information (1202) from a plurality of mobile devices of passengers using a transportation service,
estimating a transfer demand corresponding to a number of passengers intending to transfer between two different transportation services based on the received travel plan(s) (1201) and historical travel data,
identifying the transportation vehicle of a first transportation service used by a passenger by comparing location information and time stamps received from the mobile device of a passenger to routes and schedules data of the first service,
predicting the arrival time at a transfer station for transferring between the first service and a second service based on historical travel data,
calculating a dwell time of a transportation vehicle of the second service in a station based on the estimated arrival time of the first service,
issuing recommendation data to a transportation vehicle operator (1300) based on which a dwell time of the transportation vehicle of a second transportation service and/or a cruising speed of a transportation vehicle can be selected, wherein the transportation vehicle operator (1300) is a human operator and/or a computer-based control entity,
displaying the recommendation data and prompting a human operator to select a dwell time and/or a cruising speed in case the transportation vehicle operator (1300) is a human operator, or
receiving the recommendation data and issuing a control signal to a transportation vehicle including to apply the dwell time and/or cruising speed in case the transportation vehicle operator (1300) is a computer-based control entity.

13. Computer program product storable in a memory which, when carried out by a computer, causes the computer to perform the method according to claim 12.

## Patentansprüche

1. Steuervorrichtung für ein öffentliches Verkehrssystem, die Folgendes umfasst:
eine Datenbank (1105), die konfiguriert ist, historische Reisedaten von Fahrgästen, die die Verkehrsdienste benutzen, zu speichern;
eine Umsteigebedarf-Vorhersageeinheit (1101), die konfiguriert ist, von jeder von mehreren mobilen Einrichtungen (1200) von Fahrgästen, die einen Verkehrsdienst nutzen, einen Reiseplan (1201) zu empfangen, und eine Zahl von Fahrgästen, die im Begriff sind, zwischen einem ersten und eine zweiten Verkehrsdienst umzusteigen, basierend auf dem empfangenen Reiseplan (1201) und den historischen Reisedaten als einen Umsteigebedarfswert zu bestimmen;
eine Ankunftszeit-Vorhersageeinheit (1102), die konfiguriert ist, eine Ankunftszeit eines Verkehrsmittels eines ersten Verkehrsdienstes an einer Haltestelle für das Umsteigen zwischen dem ersten Verkehrsdienst und einem zweiten Verkehrsdienst vorherzusagen,
eine Haltestellenaufenthaltszeit-Analyseeinheit (1103), die konfiguriert ist, den Umsteigebedarfswert von der Umsteigebedarf-Vorhersageeinheit (1101) und die vorhergesagten Ankunftszeiten von einem oder mehreren ersten Verkehrsmitteln von der Ankunftszeit-Vorhersageeinheit (1102) zu empfangen, und eine Reisegeschwindigkeit des Verkehrsmittels und/oder eine oder mehrere Haltestellenaufenthaltszeiten des zweiten Verkehrsdienstes an einer Haltestelle basierend auf den vorhergesagten Ankunftszeiten zu bestimmen,
wobei die Haltestellenaufenthaltszeit-Analyseeinheit (1103) ferner konfiguriert ist, Empfehlungsdaten an einen Fahrer (1300) des Verkehrsmittels auszugeben, auf deren Basis eine Haltestellenaufenthaltszeit des Verkehrsmittels eines zweiten Verkehrsdienstes und/oder eine Reisegeschwindigkeit eines Verkehrsmittels ausgewählt werden kann, wobei der Fahrer (1300) des Verkehrsmittels ein menschlicher Fahrer und/oder eine computerbasierte Steuerentität ist, und
wobei dann, wenn der Fahrer (1300) des Verkehrsmittels ein menschlicher Fahrer ist, die Steuervorrichtung eine graphische Benutzerschnittstelle enthält, die konfiguriert ist, die Empfehlungsdaten anzuzeigen und den menschlichen Fahrer aufzufordern, eine Haltestellenaufenthaltszeit und/oder eine Reisegeschwindigkeit auszuwählen; oder
wobei dann, wenn der Fahrer (1300) des Verkehrsmittels eine computerbasierte Steuerentität ist, der Fahrer (1300) des Verkehrsmittels die Empfehlungsdaten empfängt und ein Steuersignal an ein Verkehrsmittel ausgibt, das das Anwenden der Haltestellenaufenthaltszeit und/oder der Reisegeschwindigkeit enthält.

2. Steuervorrichtung nach Anspruch 1,
wobei die Datenbank (1105) ferner Koordinaten von Routen und Haltestellen und Fahrplandaten von verfügbaren Verkehrsdiensten, und historische Ankunfts- und Abfahrtszeiten der Verkehrsdienste enthält, und
die Steuervorrichtung eine Reisebedarf-Vorhersageeinheit (1101A) enthält, die konfiguriert ist, die historischen Reisedaten und die Koordinaten von Routen und Haltestellen, und die historische Ankunfts- und Abfahrtszeiten der Verkehrsdienste aus der Datenbank (1105) zu empfangen, und
die Reisebedarf-Vorhersageeinheit (1101A) ferner konfiguriert ist, eine Reise-Ursprungs-Ziel-Matrix (OD-Matrix), die historische Fahrgastfahrten enthält, durch Abstimmen der historischen Reisedaten mit den Koordinaten von Routen und Haltestellen, und/oder den historischen Ankunfts- und Abfahrtszeiten der Verkehrsdienste zu erzeugen.

3. Steuervorrichtung nach Anspruch 2, wobei die historischen Reisedaten Daten von Chipkarten oder mobilen Einrichtungen eines Fahrgastes enthalten, die Ortsinformationen und Zeitstempel für jeden Ort des Fahrgastes entlang einer gesamten Fahrt enthalten, und/oder die historischen Daten Daten von einem Be-in/Be-out-Smartticket enthalten, die die Orte und Zeitstempel des Fahrgastes zum Zeitpunkt des Betretens und des Verlassens eines Verkehrssystems enthalten.

4. Steuervorrichtung nach Anspruch 2 oder 3, wobei die Umsteigebedarf-Vorhersageeinheit (1101) eine trainierte Einheit für maschinelles Lernen enthält, die als eine Eingabe, die Reise-OD-Matrix-Daten und den tatsächlichen Umsteigebedarf von Fahrgästen empfängt, um den Umsteigebedarfswert zu erzeugen.

5. Steuervorrichtung nach Anspruch 4, wobei die Umsteigebedarf-Vorhersageeinheit (1101) ferner Daten über geographische Entfernungen zwischen Haltestellen von verschiedenen Verkehrsdiensten, die in der Datenbank (1105) gespeichert sind, empfängt, und
die trainierte Einheit für maschinelles Lernen die geographischen Entfernungen als eine weitere Eingabe verwendet, um den Umsteigebedarfswert zu bestimmen.

6. Steuervorrichtung nach mindestens einem der vorhergehenden Ansprüche 4 bis 5,
wobei die Datenbank (1105) ferner konfiguriert ist, Wetterinformationen zu speichern, und
die trainierte Einheit für maschinelles Lernen der Umsteigebedarf-Vorhersageeinheit (1101) ferner konfiguriert ist, den Umsteigebedarfswert zwischen jeder Haltestelle des ersten Verkehrsdienstes und jeder Haltestelle des zweiten Verkehrsdienstes basierend auf den zusätzlichen Informationen bezüglich der Wetterinformationen zu schätzen.

7. Steuervorrichtung nach mindestens einem der vorhergehenden Ansprüche, wobei die Ankunftszeit-Vorhersageeinheit (1102) konfiguriert ist,
- Ortsinformationen (1202) und Zeitstempel von mehreren mobilen Einrichtungen von Fahrgästen, die einen Verkehrsdienst nutzen, zu empfangen und diese auf Koordinaten der Routen und Haltestellen und Fahrplandaten von verfügbaren Verkehrsdiensten, die in der Datenbank (1105) gespeichert sind, abzustimmen, und
- die Ankunftszeit-Vorhersageeinheit (1102) eine trainierte Einheit für maschinelles Lernen enthält, die konfiguriert ist, tatsächliche Fahrzeiten des Verkehrsdienstes basierend auf den Ortsinformationen von den mehreren mobilen Einrichtungen zu bewerten, um die Fahrzeiten des Verkehrsdienstes basierend auf historischen Reisedaten zu bewerten und eine vorhergesagte Ankunftszeit an den nächsten Haltestellen des Verkehrsdienstes zu schätzen.

8. Steuervorrichtung nach Anspruch 1, die ferner konfiguriert ist, eine Verzögerung zu bestimmen, die sich auf eine Haltestellenaufenthaltszeit oder eine Reisegeschwindigkeit, die durch die Haltestellenaufenthaltszeit-Analyseeinheit (1103) bestimmt werden, bezieht, wobei
die Verzögerung die Verzögerungszeit des Verkehrsmittels an den Haltestellen des zweiten Verkehrsdienstes, die Verzögerung von Fahrgästen in dem Verkehrsmittel und/oder die Verzögerungszeit von anderen Verkehrsmitteln des zweiten Verkehrsdienstes enthält, und
wobei dann, wenn die Verzögerung unterhalb eines vordefinierten Schwellenwertes liegt, die Haltestellenaufenthaltszeit-Analyseeinheit (1103) konfiguriert ist, Empfehlungsdaten zu erzeugen, die eine Empfehlung, eine Haltestellenaufenthaltszeit und/oder eine Reisegeschwindigkeit auszuwählen, enthalten.

9. Steuervorrichtung nach Anspruch 1 oder 8, die ferner konfiguriert ist, einen Wirkungsparameter zu bestimmen, der sich auf einen Gesamtkostenparameter bezieht, wobei
wobei dann, wenn der Wirkungsparameter unterhalb eines vordefinierten Schwellenwertes liegt, die Haltestellenaufenthaltszeit-Analyseeinheit (1103) konfiguriert ist, Empfehlungsdaten zu erzeugen, die eine Empfehlung enthalten, eine Haltestellenaufenthaltszeit und/oder eine Reisegeschwindigkeit auszuwählen.

10. Steuervorrichtung nach mindestens einem der vorhergehenden Ansprüche,
wobei die Vorrichtung ferner eine Rückkopplungs-Abfahrtszeitaktualisierungseinheit (1104) umfasst, die konfiguriert ist, eine aktualisierte Abfahrtszeit des Verkehrsmittels des zweiten Verkehrsdienstes von dem Fahrer (1300) des Verkehrsmittels zu empfangen und die aktualisierte Abfahrtszeit an die mehreren Fahrgasteinrichtungen (1200) zu senden.

11. Verkehrssystem, das Folgendes umfasst:
mehrere mobile Einrichtungen (1200) der Fahrgäste, die konfiguriert sind, einen Reiseplan (1201) und Ortsinformationen (1202), die Zeitstempel eines Fahrgastes, der einen Verkehrsdienst benutzt, enthalten, zu übertragen;
ein Backend-Serversystem (1100), das konfiguriert ist, mit den mehreren mobilen Einrichtungen der Fahrgäste und einem Fahrer (1300) oder einer computerbasierten Steuereinheit zu kommunizieren;
wobei das Backend-Serversystem (1100) eine Steuervorrichtung nach mindestens einem der Ansprüche 1 bis 10 umfasst.

12. Verfahren zum Bestimmen einer angepassten Abfahrtszeit, das Folgendes umfasst:
Empfangen eines Reiseplans (1201) und Ortsinformationen (1202) von mehreren mobilen Einrichtungen von Fahrgästen, die einen Verkehrsdienst benutzen,
Schätzen eines Umsteigebedarfs entsprechend einer Zahl von Fahrgästen, die beabsichtigen zwischen zwei verschiedenen Verkehrsdiensten umzusteigen, basierend auf dem empfangenen Reiseplan bzw. den empfangenen Reiseplänen (1201) und historischen Reisedaten,
Identifizieren des Verkehrsmittels eines ersten Verkehrsdienstes, das von einem Fahrgast benutzt wird, durch Vergleichen von Ortsinformationen und Zeitstempeln, die von der mobilen Einrichtung des Fahrgastes empfangen werden, mit Routen und Fahrplandaten des ersten Dienstes,
Vorhersagen der Ankunftszeit an einer Umsteige-Haltestelle zum Umsteigen zwischen dem ersten Dienst und dem zweiten Dienst basierend auf historischen Reisedaten,
Berechnen einer Haltestellenaufenthaltszeit eines Verkehrsmittels des zweiten Dienstes an einer Haltestelle basierend auf der geschätzten Ankunftszeit des ersten Dienstes,
Ausgeben von Empfehlungsdaten an den Fahrer (1300) eines Verkehrsmittels, basierend auf welchen eine Haltestellenaufenthaltszeit des Verkehrsmittels eines zweiten Verkehrsdienstes und/oder eine Reisegeschwindigkeit eines Verkehrsmittels ausgewählt werden kann, wobei der Fahrer (1300) des Verkehrsmittels ein menschlicher Fahrer und/oder eine computerbasierte Steuerentität ist,
Anzeigen der Empfehlungsdaten und Auffordern eines menschlichen Fahrers, eine Haltestellenaufenthaltszeit und/oder eine Reisegeschwindigkeit auszuwählen, falls der Fahrer (1300) des Verkehrsmittels ein menschlicher Fahrer ist, oder
Empfangen der Empfehlungsdaten und Ausgeben eines Steuersignals an ein Verkehrsmittel, das das Anwenden der Haltestellenaufenthaltszeit und/oder die Reisegeschwindigkeit enthält, falls der Fahrer (1300) des Verkehrsmittels eine computerbasierte Steuerentität ist.

13. Computerprogrammprodukt, das in einem Speicher gespeichert werden kann, das dann, wenn es durch einen Computer ausgeführt wird, den Computer veranlasst, das Verfahren nach Anspruch 12 durchzuführen.

## Revendications

1. Appareil de commande pour un système de transport public, comprenant :
une base de données (1105) configurée pour stocker des données historiques de circulation de passagers utilisant les services de transport ;
une unité de prédiction de demande de transfert (1101) configurée pour recevoir un plan de circulation (1201) depuis chacun d'une pluralité de dispositifs mobiles (1200) de passagers utilisant un service de transport, et pour déterminer, à titre de valeur de demande de transfert, un nombre de passagers qui sont sur le point d'effectuer un transfert entre un premier et un second service de transport sur la base du plan de circulation reçu (1201) et des données historiques de circulation ;
une unité de prédiction d'heure d'arrivée (1102) configurée pour prédire une heure d'arrivée d'un véhicule de transport d'un premier service de transport à une station pour un transfert entre le premier service de transport et un second service de transport,
une unité d'analyse de temps d'arrêt (1103) configurée pour recevoir la valeur de demande de transfert depuis l'unité de prédiction de demande de transfert (1102) et les heures d'arrivée prédites d'un ou de plusieurs premiers véhicules de transport depuis l'unité de prédiction d'heure d'arrivée (1102), et pour déterminer une vitesse de croisière du véhicule de transport et/ou un ou plusieurs temps d'arrêt du second service de transport dans une station sur la base des heures d'arrivée prédites,
dans lequel l'unité d'analyse de temps d'arrêt (1103) est en outre configurée pour émettre des données de recommandation à un opérateur de véhicule de transport (1300) sur la base du fait de savoir quel temps d'arrêt du véhicule de transport d'un second service de transport et/ou quelle vitesse de croisière d'un véhicule de transport peuvent être sélectionnés, dans lequel l'opérateur de véhicule de transport (1300) est un opérateur humain et/ou une entité de commande basée sur ordinateur, et
dans un cas où l'opérateur de véhicule de transport (1300) est un opérateur humain, l'appareil de commande inclut une interface graphique utilisateur qui est configurée pour afficher les données de recommandation et inviter l'opérateur humain à sélectionner un temps d'arrêt et/ou une vitesse de croisière ; ou
dans un cas où l'opérateur de véhicule de transport (1300) est une entité de commande basée sur ordinateur, l'opérateur de véhicule de transport (1300) reçoit les données de recommandation et émet un signal de commande à un véhicule de transport incluant d'appliquer le temps d'arrêt et/ou la vitesse de croisière.

2. Appareil de commande selon la revendication 1,
dans lequel la base de données (1105) inclut en outre des coordonnées d'itinéraires et de stations et des données de programme de services de transport disponibles, et des heures historiques d'arrivée et de départ des services de transport, et
l'appareil de commande inclut une unité de prédiction de demande de circulation (1101A) qui est configurée pour recevoir les données historiques de circulation et les coordonnées d'itinéraires et de stations, et les heures historiques d'arrivée et de départ des services de transport depuis la base de données (1105), et
l'unité de prédiction de demande de circulation (1101A) est en outre configurée pour générer une matrice origine-destination (OD) de circulation incluant les voyages historiques de passagers en mettant en correspondance les données historiques de circulation et les coordonnées d'itinéraires et de stations, et/ou les heures historiques d'arrivée et de départ des services de transport.

3. Appareil de commande selon la revendication 2, dans lequel les données historiques de circulation incluent des données provenant de cartes à puces ou de dispositifs mobiles d'un passager qui incluent des informations d'emplacement et des horodatages pour chaque emplacement du passager le long d'un voyage entier et/ou les données historiques incluent des données provenant d'un ticket intelligent d'entrée/sortie dit be-in/be-out qui incluent les emplacements et horodatages du passager au moment d'entrer et de sortir d'un système de transport.

4. Appareil de commande selon la revendication 2 ou 3, dans lequel l'unité de prédiction de demande de transfert (1101) inclut une unité d'apprentissage automatique entraînée qui reçoit, à titre d'entrée, les données de matrice OD de circulation et les demandes de transfert réelles provenant de passagers pour générer la valeur de demande de transfert.

5. Appareil de commande selon la revendication 4, dans lequel l'unité de prédiction de demande de transfert (1101) reçoit en outre des données concernant des distances géographiques entre des stations de différents services de transports qui sont stockées dans la base de données (1105), et l'unité d'apprentissage automatique entraînée utilise les distances géographiques à titre d'entrée supplémentaire pour déterminer la valeur de demande de transfert.

6. Appareil de commande selon l'une au moins des revendications précédentes 4 à 5,
dans lequel la base de données (1105) est en outre configurée pour stocker des informations météorologiques, et
l'unité d'apprentissage automatique entraînée de l'unité de prédiction de demande de transfert (1102) est en outre configurée pour estimer la valeur de demande de transfert entre chaque station du premier service de transport et chaque station du second service de transport sur la base des informations additionnelles en relation avec les informations météorologiques.

7. Appareil de commande selon l'une au moins des revendications précédentes, dans lequel l'unité de prédiction d'heure d'arrivée (1102) est configurée pour :
- recevoir des informations d'emplacement (1202) et des horodatages depuis une pluralité de dispositifs mobiles de passagers utilisant un service de transport et pour les faire correspondre à des coordonnées d'itinéraires et de stations et des données de programme de services de transport disponibles stockées dans la base de données (1105), et
- l'unité de prédiction d'heure d'arrivée (1102) inclut une unité d'apprentissage automatique qui est configurée pour évaluer des heures de circulation réelles du service de transport sur la base des informations d'emplacement depuis la pluralité de dispositifs mobiles, pour évaluer les heures de circulation du service de transport sur la base de données historiques de circulation et pour évaluer une heure d'arrivée prédite aux stations suivantes du service de transport.

8. Appareil de commande selon la revendication 1, configuré pour déterminer un retard qui est lié à un temps d'arrêt ou à une vitesse de croisière déterminé par l'unité d'analyse de temps d'arrêt (1103), dans lequel
le retard inclut le temps de retard du véhicule de transport aux stations du second service de transport, le retard de passagers à l'intérieur du véhicule de transport et/ou le temps de retard d'autres véhicules de transport du second service de transport, et
dans un cas où le retard est en dessous d'un seuil prédéfini, l'unité d'analyse de temps d'arrêt (1103) est configurée pour générer des données de recommandation incluant une recommandation pour sélectionner un temps d'arrêt et/ou une vitesse de croisière.

9. Appareil de commande selon les revendications 1 ou 8, configuré en outre pour déterminer un paramètre d'impact qui est en relation avec un paramètre de coût total, dans lequel
dans un cas où le paramètre d'impact est en dessous d'un seuil prédéfini, l'unité d'analyse de temps d'arrêt (1103) est configurée pour générer des données de recommandation incluant une recommandation pour sélectionner un temps d'arrêt et/ou une vitesse de croisière.

10. Appareil de commande selon l'une au moins des revendications précédentes,
dans lequel l'appareil comprend en outre une unité de mise à jour d'heure de départ de feed-back (1104) configurée pour recevoir une heure de départ mise à jour du véhicule de transport du second service de transport depuis l'opérateur (1300) d'un véhicule de transport et pour envoyer l'heure de départ mise à jour à la pluralité de dispositifs de passagers (1200).

11. Système de transport comprenant :
une pluralité de dispositifs mobiles de passagers (1200) configurés pour transmettre un plan de circulation (1201) et des informations d'emplacement (1202) incluant des horodatages d'un passager utilisant un service transport ;
un système de serveur back-end (1100) configuré pour communiquer avec la pluralité de dispositifs mobiles de passagers et un opérateur (1300) ou une unité de commande basée sur ordinateur ;
le système de serveur back-end (1100) comprenant un appareil de commande selon l'une au moins des revendications 1 à 10.

12. Procédé pour déterminer une heure de départ adaptée comprenant les étapes consistant à :
recevoir un plan de circulation (1201) et des informations d'emplacement (1202) depuis une pluralité de dispositifs mobiles de passagers utilisant un service de transport,
estimer une demande de transfert correspondant à un nombre de passagers ayant l'intention d'effectuer un transfert entre deux services de transport différents sur la base du/des plan(s) de circulation reçu(s) (1201) et des données historiques de circulation,
identifier le véhicule de transport d'un premier service de transport utilisé par un passager en comparant des informations d'emplacement et des horodatages reçus depuis le dispositif mobile d'un passager à des itinéraires et des données de programme du premier service,
prédire l'heure d'arrivée à une station de transfert pour un transfert entre le premier service et un second service sur la base de données historiques de circulation,
calculer un temps d'arrêt d'un véhicule de transport du second service dans une station sur la base de l'heure d'arrivée estimée du premier service,
émettre des données de recommandation à un opérateur de véhicule de transport (1300) sur la base du fait de savoir quel temps d'arrêt du véhicule de transport d'un second service de transport et/ou quelle vitesse de croisière d'un véhicule de transport peuvent être sélectionnés, dans lequel l'opérateur de véhicule transport (1300) est un opérateur humain et/ou une entité de commande basée sur ordinateur,
afficher les données de recommandation et inviter un opérateur humain à sélectionner un temps d'arrêt et/ou une vitesse de croisière dans un cas où l'opérateur de véhicule de transport (1300) est un opérateur humain, ou recevoir les données de recommandation et émettre un signal de commande à un véhicule de transport incluant d'appliquer le temps d'arrêt et/ou la vitesse de croisière dans un cas où l'opérateur de véhicule de transport (1300) est une entité de commande basée sur ordinateur.

13. Produit de programme d'ordinateur pouvant être stocké dans une mémoire, qui, quand il est mis en œuvre par un ordinateur, amène l'ordinateur à effectuer le procédé selon la revendication 12.
